# EUROPEAN PATENT APPLICATION

(11) **EP 4 697 690 A1**
(43) Date of publication of application: **18.02.2026**
(21) Application number: 24811254.2
(22) Date of filing: 09.04.2024
(51) Int. Cl.: H04M 1/72454, H04M 1/02, G06F 3/04845, G06F 3/041

(54) **METHOD FOR DISPLAYING BACKGROUND IMAGE, AND FOLDABLE ELECTRONIC DEVICE THEREOF**

(30) Priority: 24.05.2023 KR 20230066831; 26.06.2023 KR 20230082006
(71) Applicant: Samsung Electronics Co., Ltd., Suwon-si, Gyeonggi-do 16677 (KR)
(72) Inventor: HEO, Jungah, Suwon-si, Gyeonggi-do 16677 (KR); KIM, Namin, Suwon-si, Gyeonggi-do 16677 (KR); LEE, Eunbin, Suwon-si, Gyeonggi-do 16677 (KR); LIM, Yeunwook, Suwon-si, Gyeonggi-do 16677 (KR); HAN, Heelim, Suwon-si, Gyeonggi-do 16677 (KR)
(74) Representative: HGF
(86) International application number: PCT/KR2024/004736
(87) International publication number: WO 2024/242315

(57) **Abstract**

Various embodiments of the present invention may comprise: a first housing (210) and a second housing (220) disposed on both sides of a folding axis and folded with respect to each other; a first display (230) disposed to face a first direction of the first housing and the second housing; a second display (240) disposed to face a second direction opposite to the first direction of either the first housing or the second housing; and a processor (120). The processor can be configured to identify a folding state of the foldable electronic device, detect a change in folding angle between the first housing and the second housing on the basis of the identified folding state, change background images of the first display and the second display in association with each other in response to the folding angle, and display the changed background images on the first display or the second display. Various embodiments are possible.

## Description

### [Technical Field]

Various embodiments of the disclosure relate to a method for displaying a background image and a foldable electronic device therefor.

### [Background Art]

In line with the development of digital technology, various types of electronic devices such as mobile communication terminals, personal digital assistants (PDAs), electronic organizers, smartphones, tablet PCs, or wearable devices are widely used. Such electronic devices are continuously improved in terms of hardware and/or software to support and enhance the functionality.

For example, electronic devices are gradually increasing the screen size on displays with limited sizes and are designed to provide various services to users through larger screens. Such electronic devices may have new form factors, such as multi-display (e.g., dual-display) devices (e.g., foldable electronic devices, rollable devices, or slidable devices). Foldable electronic devices are equipped with displays that can be folded (or bent) (e.g., foldable displays or flexible displays) and may be used folded or unfolded. Rollable or slidable devices are equipped with flexible displays, allowing the flexible display to be rolled up and stored on the back surface of the rollable device or expanded to the front surface of the rollable device for use.

### [Disclosure of Invention]

### [Technical Problem]

In an embodiment, a method and an apparatus for changing and displaying a background image on a first display (e.g., main display) and a second display (e.g., sub-display) in response to a change in the folding angle in a foldable electronic device may be disclosed.

### [Solution to Problem]

A foldable electronic device according to an embodiment of the disclosure may include: a first housing 210 and a second housing 220 disposed on both sides with reference to a folding axis and configured to be folded with respect to each other; a first display 230 disposed to face a first direction of the first housing and the second housing; a second display 240 disposed to face a second direction opposite to the first direction of one of the first housing or the second housing; a sensor module 176; a memory 130; and a processor 120 operatively connected to the first display, the second display, the sensor module, or the memory, wherein the processor is configured to: identify a folding state of the foldable electronic device; detect a change in the folding angle between the first housing and the second housing, based on the identified folding state; change background images of the first display and the second display in an interlocked manner in response to the folding angle; and display the changed background image on at least one of the first display or the second display.

A method for operating a foldable electronic device 101 including a first housing 210 and a second housing 220 disposed on both sides with reference to a folding axis and configured to be folded with respect to each other according to an embodiment of the disclosure may include: identifying a folding state of the foldable electronic device; detecting a change in the folding angle between the first housing and the second housing, based on the identified folding state; changing background images of a first display and a second display in an interlocked manner in response to the folding angle; and displaying the changed background image on the first display or the second display, wherein the first display is disposed to face a first direction of the first housing and the second housing, and the second display is disposed to face a second direction opposite to the first direction of one of the first housing or the second housing.

### [Advantageous Effects of Invention]

According to an embodiment, different background images may be provided on different displays of a foldable electronic device according to the folding angle, thereby providing new user experiences.

According to an embodiment, the usability of the foldable electronic device may be enhanced by displaying images dynamically changing according to the folding angle, the folding or unfolding speed, or the folder opening mode (horizontal/vertical).

According to an embodiment, a background image appropriate for the user's preferences and situations may be generated by using context data or the user's biometric information, and the generated background image may be differently provided on different displays of the foldable electronic device according to the folding angle.

### [Brief Description of Drawings]

FIG. 1 is a block diagram of an electronic device in a network environment according to an embodiment.
FIG. 2A is a diagram illustrating the unfolding state of a foldable electronic device according to an embodiment.
FIG. 2B is a diagram illustrating the folding state of a foldable electronic device according to an embodiment.
FIG. 2C is a diagram illustrating the intermediate state or unfolding state of a foldable electronic device according to an embodiment.
FIG. 3 is a diagram illustrating an example of changing and displaying a background image in response to a change in the folding angle in a foldable electronic device according to an embodiment.
FIG. 4 is a flowchart illustrating a method for operating a foldable electronic device according to an embodiment.
FIG. 5 is a diagram illustrating an example of sensing the folding angle according to the folding state of a foldable electronic device according to an embodiment.
FIG. 6 is a diagram illustrating an example of changing and displaying a background image according to a change in the folding angle in a foldable electronic device according to an embodiment.
FIG. 7A to FIG. 7C illustrate an example of interlocking and changing background images on two displays according to a change in the folding angle in a foldable electronic device according to an embodiment.
FIG. 8 is a flowchart illustrating a method for changing and displaying a background image in a foldable electronic device according to an embodiment.
FIG. 9A and FIG. 9B illustrate an example of changing and displaying a background image according to the folding angle and acceleration data in a foldable electronic device according to an embodiment.
FIG. 10A and FIG. 10B illustrate an example of changing and displaying a background image according to the folding angle and acceleration data in a foldable electronic device according to an embodiment.
FIG. 11 is a flowchart illustrating a method for changing and displaying an object motion of a background image in a foldable electronic device according to an embodiment.
FIG. 12A and FIG. 12B are diagrams illustrating an example of changing and displaying a background image, based on the angle with the user, in a foldable electronic device according to an embodiment.
FIG. 13A and FIG. 13B are diagrams illustrating an example of generating a background image, based on context data and biometric information, in a foldable electronic device according to an embodiment.
FIG. 14 is a flowchart illustrating a method for generating a background, changing the generated background image according to the folding angle, and displaying the same in a foldable electronic device according to an embodiment.
FIG. 15A and FIG. 15B are diagrams illustrating an example of generating a background image, based on messages, in a foldable electronic device according to an embodiment.
FIG. 16 is a diagram illustrating an example of generating a background image, based on context data and biometric information, in a foldable electronic device according to an embodiment.
FIG. 17 is a diagram illustrating an example of generating a background image, based on context data and biometric information, in a foldable electronic device according to an embodiment.

### [Mode for the Invention]

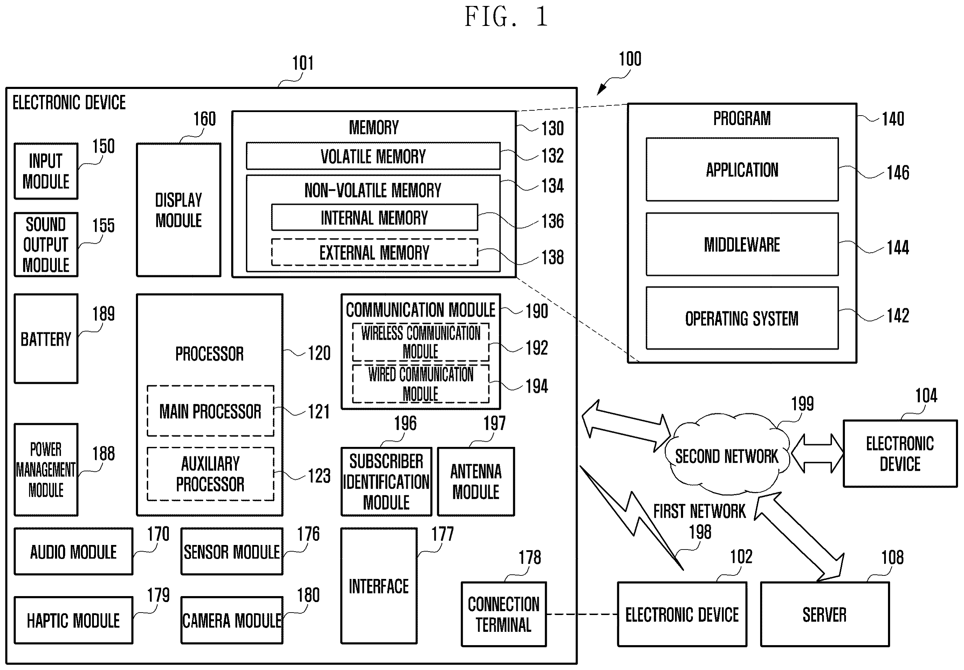

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multipleoutput (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

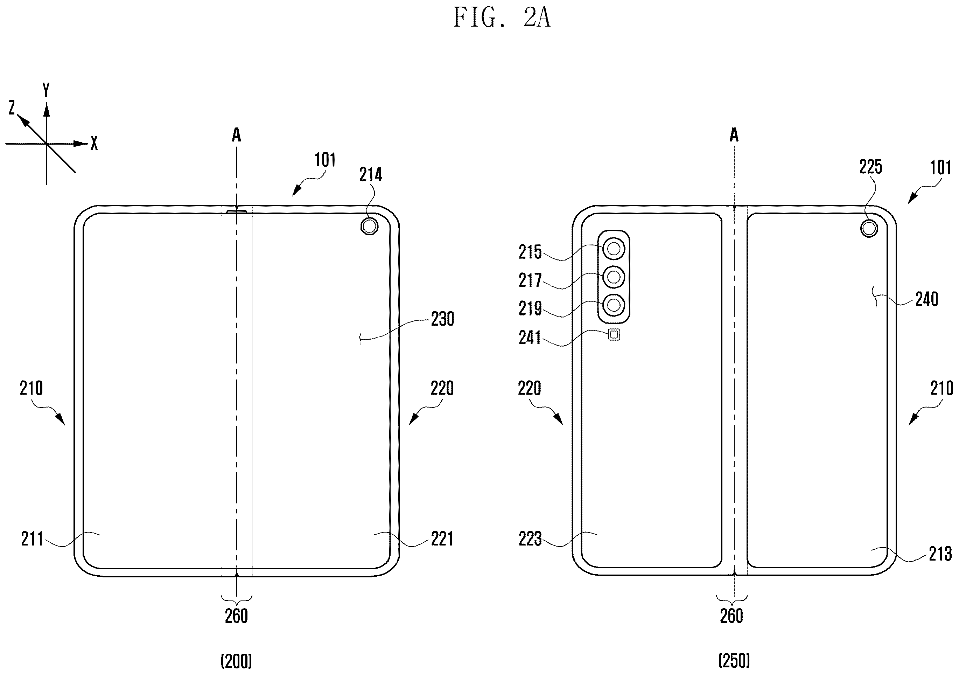

FIG. 2A is a diagram illustrating the front surface 200 of an electronic device 101 and the rear surface 250 of the electronic device 101 in an unfolding state of the foldable electronic device according to various embodiments.

Referring to FIG. 2A, the foldable electronic device (e.g., the electronic device 101 of FIG. 1) according to various embodiments may include a first housing 210 including a first surface 211 and a third surface 213, and a second housing 220 including a second surface 221 and a fourth surface 223. The first surface 211 of the first housing 210 and the second surface 221 of the second housing 220 may represent the front surface 200 of the electronic device 101, while the third surface 213 of the first housing 210 and the fourth surface 223 of the second housing 220 may represent the rear surface 250 of the electronic device 101.

The first housing 210 and the second housing 220 may be disposed on both sides of a folding axis (e.g., axis A) and may have a shape that is generally symmetrical with respect to the folding axis. For example, on the front surface 200 of the electronic device 101, the first housing 210 may be on the left side of the electronic device 101 relative to the folding axis, and the second housing 220 may be on the right side. The first housing 210 and the second housing 220 may be designed to fold relative to each other. A hinge structure 260 is formed between the first housing 210 and the second housing 220 such that the front surface 200 of the electronic device 101 can be folded.

The first housing 210 and the second housing 220 may have varying angles or distances relative to each other depending on whether the electronic device 101 is in an unfolding (or open) state, in a folding (or closed) state, or in an intermediate state. For example, the unfolding state (unfolded state) may refer to an opened state, an open state, or a flat state. The unfolding state may refer to a state in which the first housing 210 and the second housing 220 are arranged side by side, indicating that the electronic device 101 is fully unfolded. In the unfolding state, the angle between the first housing 210 and the second housing 220 may be 180 degrees, with the first surface 211 of the first housing 210 and the second surface 221 of the second housing 220 arranged to face the same direction (e.g., the first direction). FIG. 2A is a diagram illustrating the front surface 200 of the electronic device 101 and the rear surface 250 of the electronic device 101 in the unfolding state of the electronic device 101.

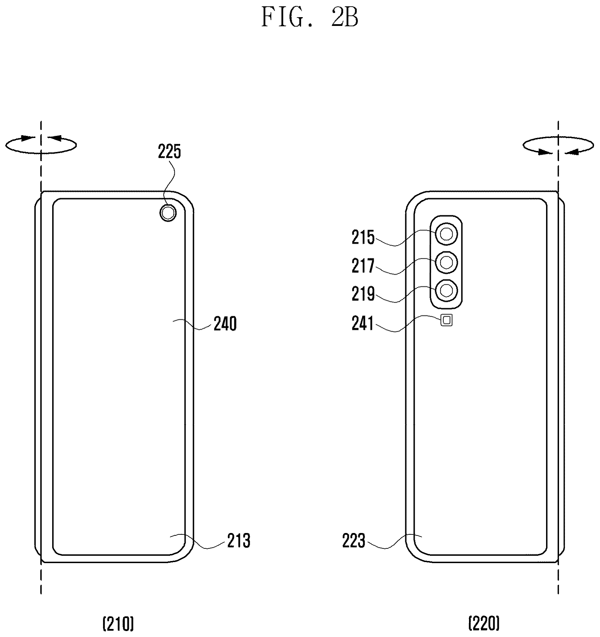

The folding state (folded state) may refer to a folded state, a folding state, a closed state, or a close state (close state) (e.g., FIG. 2B). The folding state may refer to a state in which the first housing 210 and the second housing 220 are arranged to face each other, indicating that the electronic device 101 is fully folded. In the folding state, the angle between the first housing 210 and the second housing 220 may be a narrow angle (e.g., 0 to 5 degrees), with the first surface 211 of the first housing 210 and the second surface 221 of the second housing 220 facing each other. The following description focuses on an electronic device 101 implemented in an infolding type, the same be implemented in a similar or identical manner for an electronic device 101 implemented in an out-folding type.

The intermediate state may be a state in which the first housing 210 and the second housing 220 are arranged at a specific angle, and the electronic device 101 may not be in the unfolding state or the folding state. The intermediate state may refer to a state in which the first surface 211 of the first housing 210 and the second surface 221 of the second housing 220 form a specific angle (e.g., 6 to 179 degrees).

The electronic device 101 may have a first display 230 (e.g., a main display) (e.g., the display module 160 of FIG. 1) formed on the first surface 211 and the second surface 221, which constitute the front surface 200 of the electronic device. The first display 230 may be formed across the entire front surface 200 (e.g., in the first direction of the electronic device 101). The first display 230 may refer to a flexible display, at least a partial area of which can be deformed into a flat or curved shape. The first display 230 may be folded left and right relative to a folding axis (e.g., axis A). The first display 230 may include a first display area corresponding to the first surface 211 or a second display area corresponding to the second surface 221. In addition, the electronic device 101 may have a first camera 214 disposed on the second surface 221. Although one first camera 214 is illustrated in the drawings, multiple first cameras 214 may be formed. Although the first camera 214 is illustrated in the drawings as being disposed on the second surface 221, the first camera 214 may also be formed on the first surface 211.

Furthermore, the electronic device 101 may have a second display 240 (e.g., a sub-display or a cover display) (e.g., the display module 160 of FIG. 1) formed on a part of the rear surface 250 of the electronic device. The second display 240 may be formed on at least a part of the third surface 213 of the electronic device 101. The electronic device 101 may include multiple cameras (e.g., 215, 217, 219, and 225) on the rear surface 250 of the electronic device 101. For example, the electronic device 101 may have a second camera 215, a third camera 217, and a fourth camera 219 disposed on the fourth surface 223, and may have a fifth camera 225 disposed on the third surface 213. According to various embodiments, the second camera 215, the third camera 217, the fourth camera 219, and the fifth camera 225 may have the same or different performance (e.g., field of view, resolution). For instance, the second camera 215 may have a field of view exceeding 125 degrees (e.g., ultra-wide), the third camera 217 may have a field of view of 90 to 125 degrees (e.g., wide), the fourth camera 219 may have a field of view of 90 degrees with 2x zoom (e.g., tele), and the fifth camera 225 may have a field of view of 90 degrees with standard magnification. The electronic device 101 may further include a sensor area 241 on the fourth surface 223. The sensor area 241 may have an infrared sensor, a fingerprint sensor, or an illuminance sensor disposed therein, similarly to the sensor module 176 of FIG. 1.

According to various embodiments, in the unfolding state (e.g., FIG. 2A) of the electronic device 101, the first display 230 may be turned on (or activated), and the second display 240 may be turned off (or deactivated). In case that no user input (e.g., touch, button selection) is detected for a specific period of time (e.g., 5 seconds, 10 seconds, 1 minute) while the first display 230 is turned on, the electronic device 101 may turn off the first display 230. Alternatively, in case that a user input (e.g., touch, button selection) is detected on the second display 240 while the second display 240 is turned off, the electronic device 101 may turn on the second display 240. According to various embodiments, if the second display 240 is turned on, the first display 230 may be turned off. Alternatively, even if the second display 240 is turned on, the electronic device 101 may keep the first display 230 turned on for a specific period of time, and if no user input is detected on the first display 230 after the period of time elapses, may turn off the first display 230.

The electronic device 101 may further include a sensor module (e.g., the sensor module 176 of FIG. 1). For example, the electronic device 101 may include the sensor module 176 in at least one of the first housing 210 or the second housing 220. The sensor module 176 may include at least one of an acceleration sensor, a gyroscope sensor, a geomagnetic sensor, a proximity sensor, an illuminance sensor, a gesture sensor, or a Hall sensor. The acceleration sensor may detect the speed, while the gyroscope sensor may detect the angular velocity, which is the rotational velocity of an object. The geomagnetic sensor may detect the Earth's magnetic field and may detect the direction (e.g., azimuth) of the magnetic field (e.g., east, west, south, or north) like a compass. The proximity sensor may detect whether an object is nearby, and the illuminance sensor may measure the amount of ambient light (e.g., illuminance) in real time or periodically. The gesture sensor may detect infrared rays. The Hall sensor may detect changes in electrical signals, based on an object having a magnetic force moving toward or away from the same. In case that the Hall sensor is used to detect the folding state of the electronic device 101, the electronic device 101 may further include a magnet corresponding to the Hall sensor.

FIG. 2B is a diagram illustrating the folding state of a foldable electronic device according to various embodiments.

Referring to FIG. 2B, the electronic device 101 may have a hinge structure 260 formed around the folding axis (e.g., axis A) such that the front surface 200 of the electronic device 101 to be in a folding state (e.g., closed state). FIG. 2B is a diagram showing the third surface 213 of the first housing 210 and the fourth surface 223 of the second housing 220 in the folding state of the electronic device 101.

According to various embodiments, in the folding state of the electronic device 101, the first display 230 may be turned off, and the second display 240 may be turned on. In case that no user input is detected for a specific period of time while the second display 240 is turned on, the electronic device 101 may turn off the second display 240. In case that the electronic device 101 is in the folding state and the second display 240 is turned off, and in case that a button formed (or mounted) on the electronic device 101 is selected, the electronic device 101 may turn on the second display 240. Alternatively, in case that the electronic device 101 is in the folding state, and a user input is detected on the second display 240 after the second display 240 is turned off, the electronic device 101 may turn on the second display 240.

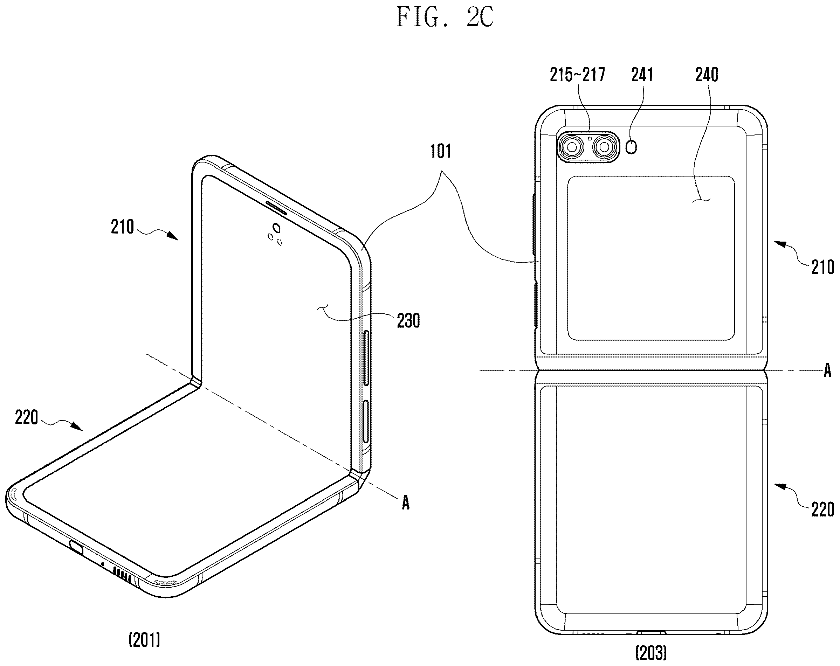

FIG. 2C is a diagram illustrating the intermediate state or unfolding state of a foldable electronic device according to various embodiments.

The foldable electronic device of FIG. 2A and FIG. 2B is an example of a device configured such that two parallel side surfaces (e.g., upper and lower side surfaces or left and right side surfaces) have similar lengths, whereas the foldable electronic device of FIG. 2C is an example of a device configured such that the first length of two parallel side surfaces (e.g., upper and lower side surfaces) is longer or shorter than the second length of the other two side surfaces (e.g., left and right side surfaces). The foldable electronic device of FIG. 2A and FIG. 2B and the foldable electronic device of FIG. 2C may differ only in the external appearance, and may operate in identical or similar manners.

Referring to FIG. 2C, the electronic device 101 may have a hinge structure 260 formed around the folding axis (e.g., axis A) such that the first housing 210 and the second housing 220 form a specific angle in an intermediate state 201. For example, in the intermediate state 201, one surface of the first housing 210 or the second housing 220 may rest on the floor, and the second housing 220 on the floor and the first housing 210 not on the floor may form a specific angle. The drawing shows a state in which the fourth surface 223 of the second housing 220 is on the floor, and the first surface 211 of the first housing 210 and the second surface 221 of the second housing 220 form a specific angle.

According to various embodiments, in the intermediate state 201, the first display 230 may be activated such that a user interface is displayed through the first display 230. The user interface may be displayed across the entire screen of the first display 230 or displayed after being divided into two parts (or areas) like a split screen. Alternatively, in the intermediate state, an output portion (e.g., an application execution screen) may be displayed through the first surface 211 of the first housing 210, while an input portion (e.g., keypad) may be displayed through the second surface 221 of the second housing 220.

Looking at the rear surface 203, a part of the rear surface 203 may include a cover display (e.g., the display module 160 of FIG. 1, the second display 240 of FIG. 2A to FIG. 2C) on the third surface 213 of the first housing 210 of the electronic device 101. Next to the second display 240, multiple cameras 215-217 and a sensor area 241 may be further included.

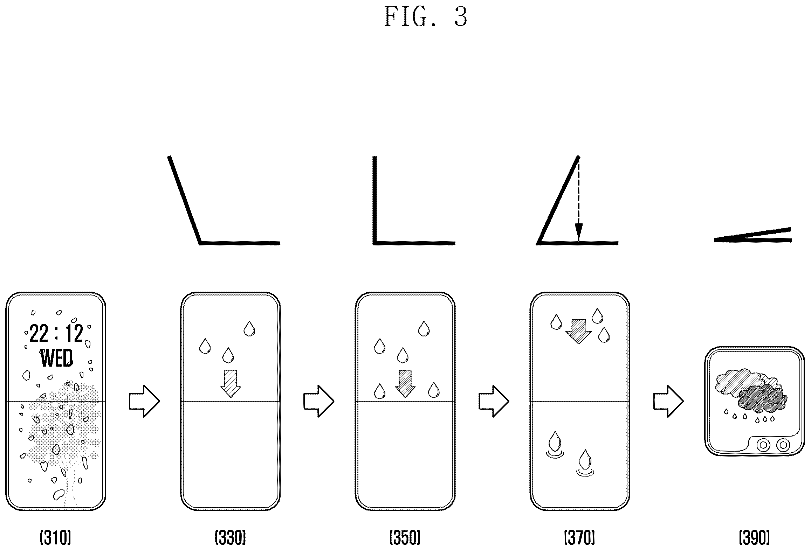

FIG. 3 is a diagram illustrating an example of changing and displaying a background image in response to changes in the folding angle of a foldable electronic device according to an embodiment.

Referring to FIG. 3, the foldable electronic device (e.g., the electronic device 101 of FIG. 1) according to an embodiment may provide a first user interface 310 in the unfolding state. The first user interface 310 may be displayed on a first display (e.g., the first display 230 of FIG. 2A and FIG. 2C) disposed in the first direction (e.g., the front surface of the foldable electronic device 101) of the first housing (e.g., the first housing 210 of FIG. 2A to FIG. 2C) and the second housing (e.g., the second housing 220 of FIG. 2A to FIG. 2C) of the foldable electronic device 101. For example, the first user interface 310 may include an image (or a background image) depicting an effect of water droplets falling (or forming) on a glass window. The image may be configured by at least one of text, an image, or a video. In the first user interface 310, the water droplets may be objects exhibiting a motion effect.

Hereinafter, the operation in which the foldable electronic device 101 transitions from an unfolding state to a folding state will be referred to as a "folding operation," and the operation in which the foldable electronic device 101 from a folding state to an unfolding state will be referred to as an "unfolding operation."

While the foldable electronic device 101 transitions from an unfolding state to a folding state (e.g., folding operation), the foldable electronic device 101 may provide at least one of a second user interface 330, a third user interface 350, or a fourth user interface 370 depending on the folding angle. For example, during the folding operation (e.g., intermediate state), in case that the folding angle between the first housing 210 and the second housing 220 is a first angle (e.g., greater than 110°), the foldable electronic device 101 may provide the second user interface 330 on the first display 230. The second user interface 330 may include an image depicting an effect of water droplets slowly sliding downward toward the folding axis (e.g., axis A of FIG. 2C). In the second user interface 330, the water droplets may move slowly toward the folding axis direction.

During the folding operation, in case that the folding angle between the first housing 210 and the second housing 220 is a second angle (e.g., less than 90°), the foldable electronic device 101 may provide the third user interface 350 on the first display 230. The third user interface 350 may include an image depicting an effect of water droplets sliding quickly downward toward the folding axis (e.g., axis A of FIG. 2C). The second angle may be smaller than the first angle. In the third user interface 350, the water droplets may move faster toward the folding axis direction than those in the second user interface 330.

During the folding operation, in case that the folding angle between the first housing 210 and the second housing 220 is a third angle (e.g., less than 60°), the foldable electronic device 101 may provide the fourth user interface 370 on the first display 230. The fourth user interface 370 may include an image depicting an effect where water droplets fall directly from the first display area of the first display 230 to the second display area of the first display 230, with water pooling in the second display area. The first display area may refer to the display area corresponding to the first surface 211 of the first housing 210, and the second display area may refer to the display area corresponding to the second surface 221 of the second housing 220. The third angle may be smaller than the second angle. In the fourth user interface 370, the water droplets may exhibit a movement from the first display area to the second display area rather than toward the folding axis.

Upon completing the folding operation, the foldable electronic device 101 may provide a fifth user interface 390 in the folding state. The fifth user interface 390 may be displayed on a second display (e.g., the second display 240 of FIG. 2A to FIG. 2C) disposed in the second direction (e.g., the rear surface of the foldable electronic device 101) of the first housing 210 of the foldable electronic device 101. For example, the fifth user interface 390 may include an image depicting an effect of rain falling from clouds in the sky. In the fifth user interface 390, the water droplets or clouds may be objects exhibiting a motion effect.

According to an embodiment, during the folding operation, the foldable electronic device 101 may display an image of water droplets or clouds moving on the second display 240 according to the folding angle. That is, while displaying the second user interface 330 to the fourth user interface 370 on the first display 230, the foldable electronic device 101 may display an image of water droplets or clouds moving on the second display 240 according to the folding angle.

According to an embodiment, during the unfolding operation, the foldable electronic device 101 may provide the first user interface 310 to the fifth user interface 390 according to the folding angle. According to an embodiment, the foldable electronic device 101 may vary the degree of object motion depending on the rate of change of the folding angle. For example, in case that the user folds (or unfolds) the foldable electronic device 101 at a high speed, the foldable electronic device 101 may display the objects moving quickly, and in case that the user folds (or unfolds) the foldable electronic device 101 at a slow speed, may display the objects moving slowly.

A foldable electronic device according to an embodiment of the disclosure may include: a first housing 210 and a second housing 220 disposed on both sides with reference to a folding axis and configured to fold with respect to each other; a first display 230 disposed to face in a first direction of the first housing and the second housing; a second display 240 disposed to face in a second direction opposite to the first direction of one of the first housing or the second housing; a sensor module 176; a memory 130; and a processor 120 operatively connected to the first display, the second display, the sensor module, or the memory, wherein the processor is configured to: identify a folding state of the foldable electronic device; detect a change in the folding angle between the first housing and the second housing, based on the identified folding state; change background images of the first display and the second display in an interlocked manner in response to the folding angle; and display the changed background image on at least one of the first display or the second display.

The processor may be configured to display different background images on at least one of the first display or the second display according to the folding angle, or to display background images on the first display and the second display in an interlocked manner.

The processor may be configured to, in case that the folding angle is a first angle, display a first background image on the first display or display a second background image on the second display, and in case that the folding angle is a second angle greater than the first angle, display a third background image on the first display or display a fourth background image on the second display. The first background image and the third background image, and the second background image and the fourth background image may have different object motion changes.

The processor may be configured to vary the degree of change of an object motion included in a background image displayed on the first display according to the rate of change in the folding angle.

The processor may be configured to acquire acceleration data from the sensor module; determine a display direction of the background image, based on the acceleration data, and display a changed background image on the first display or the second display, based on the folding angle and the display direction.

The processor may be configured to, in case that the folding angle is a first angle and the display direction is a vertical direction, display a first background image on the first display in the vertical direction.

The processor may be configured to control an object included in the first background image to move in the vertical direction.

The processor may be configured to change the object motion of the background image in response to the rate of change in the folding angle, calculate the direction of gravity, based on acceleration data acquired from the sensor module, change the object motion of the background image in response to the direction of gravity, and display the changed object motion on the first display or the second display.

The processor may be configured to calculate the angle between the foldable electronic device and a user, and change and display a background image on the first display or the second display, based on the angle with the user.

The processor may be configured to generate a new background image, based on context data and a user's biometric information, and display the new background image on the first display or the second display, based on a change in the folding angle.

The processor may be configured to receive a counterpart's background image from a counterpart electronic device, and generate a new background image, based on at least one of the counterpart's background image, the context data, and the user's biometric information.

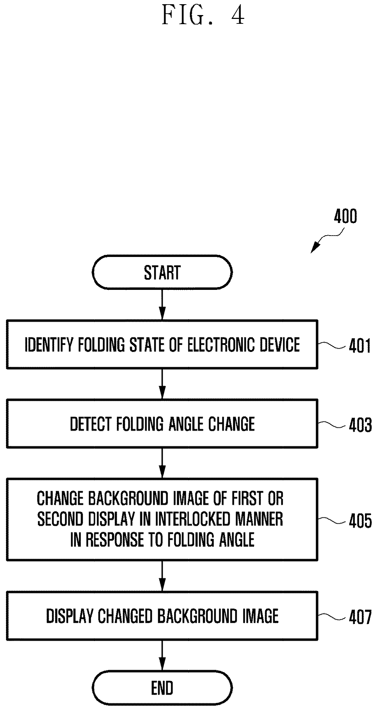

FIG. 4 is a flowchart 400 illustrating a method for operating a foldable electronic device according to an embodiment.

Referring to FIG. 4, in operation 401, the processor (e.g., the processor 120 of FIG. 1) of the foldable electronic device 101 (e.g., the electronic device 101 of FIG. 1) may check (or identify) the folding state. The processor 120 may identify the folding state of the foldable electronic device 101 by using a sensor module (e.g., the sensor module 176 of FIG. 1) included in the foldable electronic device 101. The sensor module 176 may be included in at least one of the first housing (e.g., the first housing 210 of FIG. 2A to FIG. 2C) and the second housing (e.g., the second housing 220 of FIG. 2A to FIG. 2C). The processor 120 may determine, in operation 401, whether the foldable electronic device 101 is in the unfolding state or in the folding state.

According to an embodiment, the folding angle recognized as a folding operation in the unfolding state of the foldable electronic device 101 may differ from the folding angle recognized as an unfolding operation in the folding state of the foldable electronic device 101. To this end, the processor 120 may identify whether the foldable electronic device 101 is currently in the folding state or in the unfolding state.

In operation 403, the processor 120 may detect a change in the folding angle. The change in the folding angle may occur during a folding operation or an unfolding operation. For example, the first housing 210 (or the second housing 220) may include a Hall sensor, and the second housing 220 (or the first housing 210) may include a magnet (or a magnetic material). While the folding operation or unfolding operation is performed, the Hall sensor may sense electromagnetic characteristics (e.g., voltage or magnetic force) generated (or changed) by the magnet. The processor 120 may acquire sensing data from the Hall sensor to calculate the folding angle. The processor 120 may detect a change in the folding angle, based on the calculated folding angle.

In operation 405, the processor 120 may change the background images of the first display 230 (e.g., the first display 230 of FIG. 2A and FIG. 2C) and the second display 240 (e.g., the second display 240 of FIG. 2A to FIG. 2C), which correspond to the folding angle, in an interlocked manner. In case that the angle between the first housing 210 and the second housing 220 is a first angle (e.g., greater than 110°), the processor 120 may change the image displayed on the first display 230 to a first background image (e.g., the second user interface 330 of FIG. 3). In case that the angle between the first housing 210 and the second housing 220 is the first angle (e.g., greater than 110°), the processor 120 may not activate the second display 240. Not activating the second display 240 may mean that no background image is displayed on the second display 240. Alternatively, in case that the angle between the first housing 210 and the second housing 220 is the first angle (e.g., greater than 110°), the processor 120 may change the image displayed on the second display 240 to a second background image corresponding to the first background image. The first background image or the second background image may be configured by at least one of text, an image, or a video, and may include object motion.

According to an embodiment, the first display 230 or the second display 240 may be sequentially activated according to the folding angle, and the background images of the first display 230 and the second display 240 may be interlocked and played consecutively. That is, in case that the angle between the first housing 210 and the second housing 220 falls within a first designated angle range (e.g., 180° to 60°), only the first display 230 may be activated. In case that the angle between the first housing 210 and the second housing 220 is outside the first designated angle range, both the first display 230 and the second display 240 may be activated. In case that the angle between the first housing 210 and the second housing 220 falls within a second designated angle range (e.g., less than 30°), only the second display 240 may be activated.

Alternatively, in case that the angle between the first housing 210 and the second housing 220 falls within the first designated angle range (e.g., 180° to 60°), the first display 230 and the second display 240 may be activated simultaneously.

According to an embodiment, in case that the angle between the first housing 210 and the second housing 220 is a second angle (e.g., less than 90°), the processor 120 may change the image displayed on the first display 230 to a third background image (e.g., the third user interface 350 of FIG. 3) or may change the image displayed on the second display 240 to a fourth background image corresponding to the third background image. The second angle may be less than the first angle. The third background image may be similar to the first background image but with a changed (or different) degree of object motion (e.g., speed, change). The fourth background image may be similar to the second background image but with a changed (or different) degree of object motion.

According to an embodiment, in case that the angle between the first housing 210 and the second housing 220 is a third angle (e.g., less than 60°), the processor 120 may change the image displayed on the first display 230 to a fifth background image (e.g., the fourth user interface 370 of FIG. 3) or may change the image displayed on the second display 240 to a sixth background image corresponding to the fifth background image. The third angle may be less than the second angle. The fifth background image may be similar to the first background image or the third background image but with a changed (or different) degree of object motion (e.g., speed, change). The sixth background image may be similar to the second background image or the fourth background image but with a changed (or different) degree of object motion.

In operation 407, the processor 120 may display the changed background image. For example, in case that the angle between the first housing 210 and the second housing 220 is the first angle, the processor 120 may display the first background image on the first display 230 or may display the second background image on the second display 240. In case that the angle between the first housing 210 and the second housing 220 is the second angle, the processor 120 may display the third background image on the first display 230 or may display the fourth background image on the second display 240. In case that the angle between the first housing 210 and the second housing 220 is the third angle, the processor 120 may display the fifth background image on the first display 230 or may display the sixth background image on the second display 240.

According to an embodiment, the processor 120 may repeatedly perform operations 403 to 407 such that different background images are displayed on the first display 230 and the second display 240 in an interlocked manner according to the folding angle. According to an embodiment, the processor 120 may vary the degree of object motion included in the background image according to the rate of change of the folding angle in operation 407. For example, in case that the user folds (or unfolds) the foldable electronic device 101 at a high speed, the processor 120 may display objects moving quickly and, in case that the user folds (or unfolds) the foldable electronic device 101 at a low speed, may display objects moving slowly. According to an embodiment, the processor 120 may dynamically vary the object motion included in the background image according to the folder opening mode (e.g., horizontal mode/vertical mode) in operation 407.

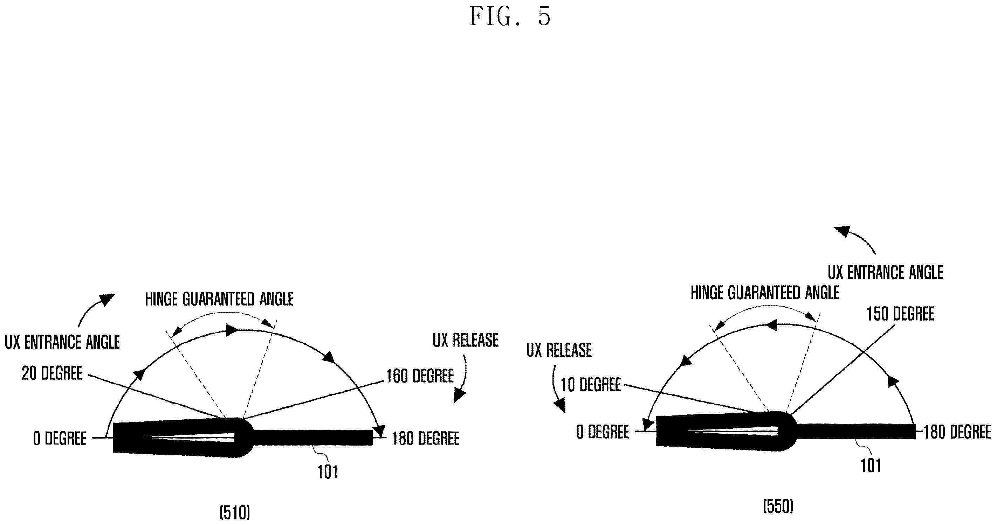

FIG. 5 is a diagram illustrating an example of sensing the folding angle according to the folding state of a foldable electronic device according to an embodiment.

Referring to FIG. 5, in connection with the foldable electronic device 101 (e.g., the electronic device 101 of FIG. 1) according to an embodiment, the folding angle recognized as a folding operation in the unfolding state of the foldable electronic device 101 may differ from the folding angle recognized as an unfolding operation in the folding state of the foldable electronic device 101. For example, in the unfolding state 510 of the foldable electronic device 101, the processor 120 may detect a change in the folding angle in case that the folding angle between the first housing (e.g., the first housing 210 of FIG. 2A to FIG. 2C) and the second housing (e.g., the second housing 220 of FIG. 2A to FIG. 2C) falls within a first angle range (e.g., 20° to 160°).

In the folding state 550 of the foldable electronic device 101, the processor 120 may detect a change in the folding angle in case that the folding angle between the first housing 210 and the second housing 220 falls within a second angle range (e.g., 10° to 150°). The first angle range and the second angle range may be identical or different. Regardless of whether the foldable electronic device 101 is in the unfolding state 510 or in the folding state 550, the intermediate-state angle (e.g., hinge guaranteed angle) may be fixed (e.g., 75° to 115°). The angle examples in the drawings and detailed description are for aiding understanding of the disclosure, and the disclosure is not limited by these examples.

According to an embodiment, the processor 120 (e.g., the processor 120 of FIG. 1) of the foldable electronic device 101 may acquire sensor data from the sensor module (e.g., the sensor module 176 of FIG. 1) in case that there is a change in the folding angle. For example, the processor 120 may periodically read sensing data from the sensor module 176 to calculate the folding angle. Because the processor 120 periodically reads sensing data to calculate the folding angle, the calculated folding angle range may vary depending on the speed of the folding operation or unfolding operation. In addition, there may be a deviation in calculating the folding angle between foldable electronic devices.

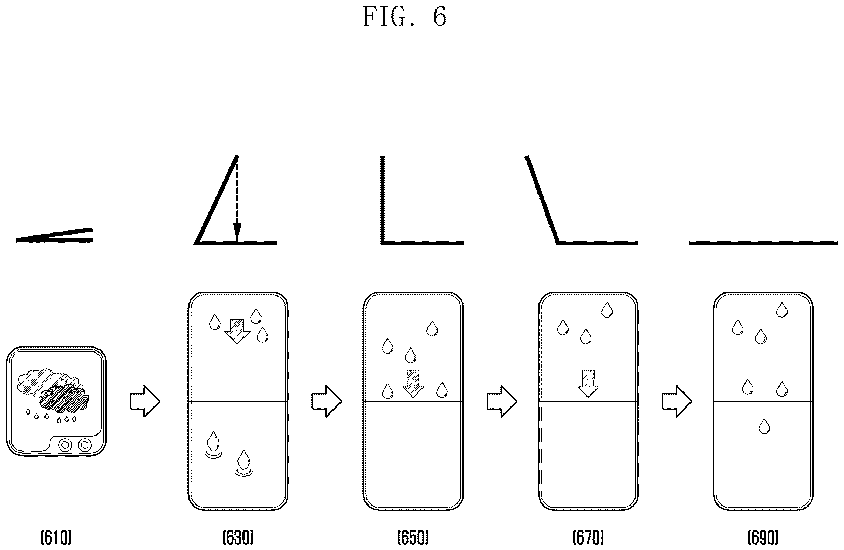

FIG. 6 is a diagram illustrating an example of changing and displaying a background image according to a change in the folding angle in a foldable electronic device according to an embodiment.

Referring to FIG. 6, the foldable electronic device 101 (e.g., the electronic device 101 of FIG. 1) according to an embodiment may provide a first user interface 610 in a folding state. The first user interface 610 may be displayed on the second display 240 (e.g., the second display 240 of FIG. 2A to FIG. 2C) disposed in the second direction (e.g., on the rear surface of the foldable electronic device 101) of the first housing (e.g., the first housing 210 of FIG. 2A to FIG. 2C) of the foldable electronic device 101. For example, the first user interface 610 may include a first background image depicting an effect of rain falling from clouds in the sky. The first background image may be configured by at least one of text, an image, or a video. In the first background image, water droplets or clouds may be objects exhibiting a motion effect.

While the foldable electronic device 101 transitions from a folding state to an unfolding state (e.g., an unfolding operation), the foldable electronic device 101 may provide at least one of a second user interface 630, a third user interface 650, or a fourth user interface 670 according to the folding angle. For example, during the unfolding operation (e.g., intermediate state), in case that the folding angle between the first housing 210 and a second housing (e.g., the second housing 220 of FIG. 2A to FIG. 2C) is a first angle (e.g., less than 60°), the foldable electronic device 101 may provide the second user interface 630 on the first display (e.g., the first display 230 of FIG. 2A and FIG. 2C). The first display 230 may be disposed in the first direction (e.g., on the front surface of the foldable electronic device 101) of the first housing 210 and the second housing 220.

The second user interface 630 may include an image depicting water droplets falling directly from the first display area of the first display 230 to the second display area of the first display 230, with an effect of water pooling in the second display area. The first display area may correspond to the first surface 211 of the first housing 210, and the second display area may correspond to the second surface 221 of the second housing 220. According to an embodiment, while displaying the second user interface 630 on the first display 230, the foldable electronic device 101 may display a second background image with moving water droplets or clouds on the second display 240. The second background image may be similar to the first background image but with different object motion changes (e.g., speed, shape).

During the unfolding operation, in case that the folding angle between the first housing 210 and the second housing 220 is a second angle (e.g., less than 90°), the foldable electronic device 101 may provide the third user interface 650 on the first display 230. The third user interface 650 may include an image depicting an effect of water droplets sliding quickly downward where the folding axis (e.g., axis A of FIG. 2C) is located. The second angle may be greater than the first angle. According to an embodiment, while displaying the third user interface 650 on the first display 230, the foldable electronic device 101 may display a third background image with moving water droplets or clouds on the second display 240. The third background image may be similar to the first background image and the second background image but with different object motion changes (e.g., speed, shape).

During the unfolding operation, in case that the folding angle between the first housing 210 and the second housing 220 is a third angle (e.g., greater than 110°), the foldable electronic device 101 may provide the fourth user interface 670 on the first display 230. The fourth user interface 670 may include an image depicting an effect of water droplets sliding slowly downward where the folding axis is located. In the fourth user interface 670, water droplets may move more slowly toward the folding axis direction compared to the water droplets in the third user interface 650. According to an embodiment, while displaying the fourth user interface 670 on the first display 230, the foldable electronic device 101 may deactivate the second display 240. Alternatively, while displaying the fourth user interface 670 on the first display 230, the foldable electronic device 101 may display a fourth background image with moving water droplets or clouds on the second display 240. The fourth background image may be similar to the first, second, and third background images but with different object motion changes (e.g., speed, shape).

Upon completing the unfolding operation, the foldable electronic device 101 may provide a fifth user interface 690 in the unfolding state. The fifth user interface 690 may be displayed on the first display 230 of the foldable electronic device 101. For example, the fifth user interface 690 may include an image (or a background image) of water droplets condensed on a glass window. In the fifth user interface 690, water droplets may be objects exhibiting a motion effect, with no movement.

According to an embodiment, the foldable electronic device 101 may vary the degree of object motion changes according to the rate of change of the folding angle. For example, in case that the user folds (or unfolds) the foldable electronic device 101 at a high speed, the foldable electronic device 101 may display objects moving quickly and, in case that the user folds (or unfolds) the foldable electronic device 101 at a low speed, may display objects moving slowly. According to an embodiment, the processor 120 may dynamically vary the object motion included in the background image according to the folder opening mode (e.g., horizontal mode/vertical mode).

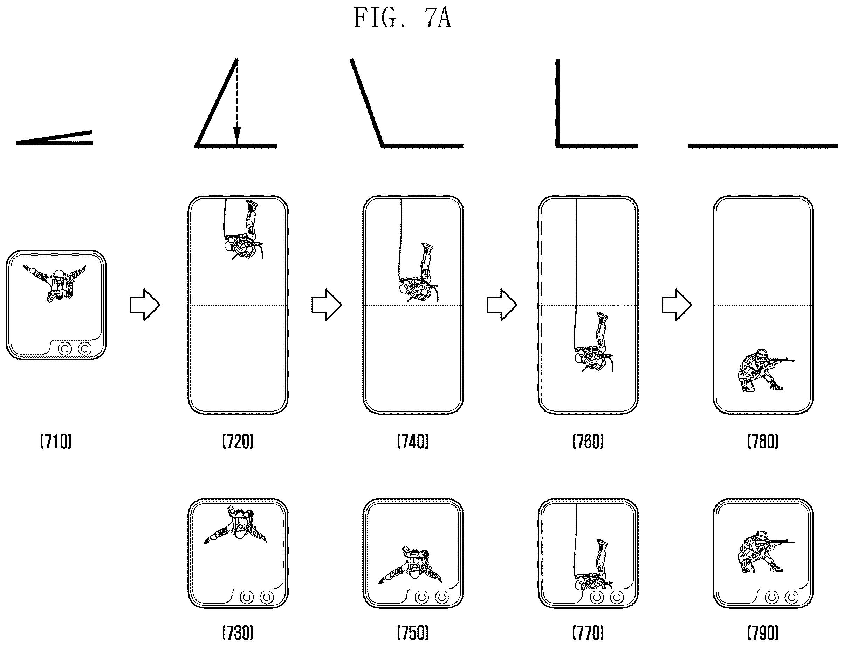

FIG. 7A to FIG. 7C illustrate an example of interlocking and changing background images on two displays according to a change in the folding angle in a foldable electronic device according to an embodiment.

Referring to FIG. 7A, the foldable electronic device (e.g., the electronic device 101 of FIG. 1) according to an embodiment may provide a first user interface 710 in the folding state. The first user interface 710 may be displayed on the second display 240 (e.g., the second display 240 of FIG. 2A to FIG. 2C) disposed in the second direction (e.g., on the rear surface of the foldable electronic device 101) of the first housing (e.g., the first housing 210 of FIG. 2A to FIG. 2C) of the foldable electronic device 101. For example, the first user interface 710 may include a first background image depicting an effect of a person falling downward from above (e.g., from the sky to the ground) (e.g., skydiving). The first background image may be configured by at least one of text, an image, or a video. In the first background image, the person may be an object exhibiting a motion effect.

During the transition of the foldable electronic device 101 from the folding state to an unfolding state (e.g., unfolding operation), in case that the folding angle between the first housing 210 and the second housing (e.g., the second housing 220 of FIG. 2A to FIG. 2C) is a first angle (e.g., less than 60°), the foldable electronic device 101 may provide a second user interface 720 on the first display (e.g., the first display 230 of FIG. 2A to FIG. 2C). The first display 230 may be disposed in the first direction of the first housing 210 and the second housing 220 (e.g., on the front surface of the foldable electronic device 101).

The second user interface 720 may include an image depicting an effect of a person falling from the first display area of the first display 230 to the second display area of the first display 230. The first display area may correspond to the first surface 211 of the first housing 210, and the second display area may correspond to the second surface 221 of the second housing 220. According to an embodiment, while displaying the second user interface 720 on the first display 230, the foldable electronic device 101 may display a third user interface 730 on the second display 240, showing a person appearing to hang upside down. The second user interface 720 and the third user interface 730 may include the same or similar images, with different object display directions (or shapes).

During the unfolding operation, in case that the folding angle between the first housing 210 and the second housing 220 is a second angle (e.g., less than 90°), the foldable electronic device 101 may provide a fourth user interface 740 on the first display 230. The fourth user interface 740 may include an image depicting an effect of a person descending toward the position of the folding axis (e.g., axis A of FIG. 2C). The second angle may be greater than the first angle. According to an embodiment, while displaying the fourth user interface 740 on the first display 230, the foldable electronic device 101 may display a fifth user interface 750 on the second display 240, showing a person appearing to hang upside down. The fourth user interface 740 and the fifth user interface 750 may include the same or similar images, with different object display directions (or shapes).

During the unfolding operation, in case that the folding angle between the first housing 210 and the second housing 220 is a third angle (e.g., greater than 110°), the foldable electronic device 101 may provide a sixth user interface 760 on the first display 230. The sixth user interface 760 may include an image depicting an effect of a person descending below the folding axis. In the sixth user interface 760, the person may move more slowly than the person in the fourth user interface 740. According to an embodiment, while displaying the sixth user interface 760 on the first display 230, the foldable electronic device 101 may display a seventh user interface 770 on the second display 240, showing a person appearing to hang upside down. The sixth user interface 760 and the seventh user interface 770 may include the same or similar images, and the object display directions (or shapes) may be identical or different.

Upon completing the unfolding operation, the foldable electronic device 101 may provide an eighth user interface 780 in the unfolding state. The eighth user interface 780 may be displayed on the first display 230 of the foldable electronic device 101. For example, the eighth user interface 780 may include an image (or a background image) of a person landing on the ground and aiming a rifle. In the eighth user interface 780, the person may be an object exhibiting a motion effect, which may be stationary. While displaying the eighth user interface 780 on the first display 230, the foldable electronic device 101 may deactivate the second display 240. Alternatively, while displaying the eighth user interface 780 on the first display 230, the foldable electronic device 101 may display a ninth user interface 790 on the second display 240, showing a person landing on the ground and aiming a rifle. The eighth user interface 780 and the ninth user interface 790 may include the same or similar images.

According to an embodiment, the foldable electronic device 101 may display the degree of object motion differently according to the rate of change of the folding angle. For example, in case that the user folds (or unfolds) the foldable electronic device 101 at a high speed, the foldable electronic device 101 may depict the object moving quickly and, in case that the user folds (or unfolds) the foldable electronic device 101 at a low speed, may depict the object moving slowly. According to an embodiment, the processor 120 may dynamically display the object motion in the background image differently according to the folder opening mode (e.g., horizontal mode/vertical mode).

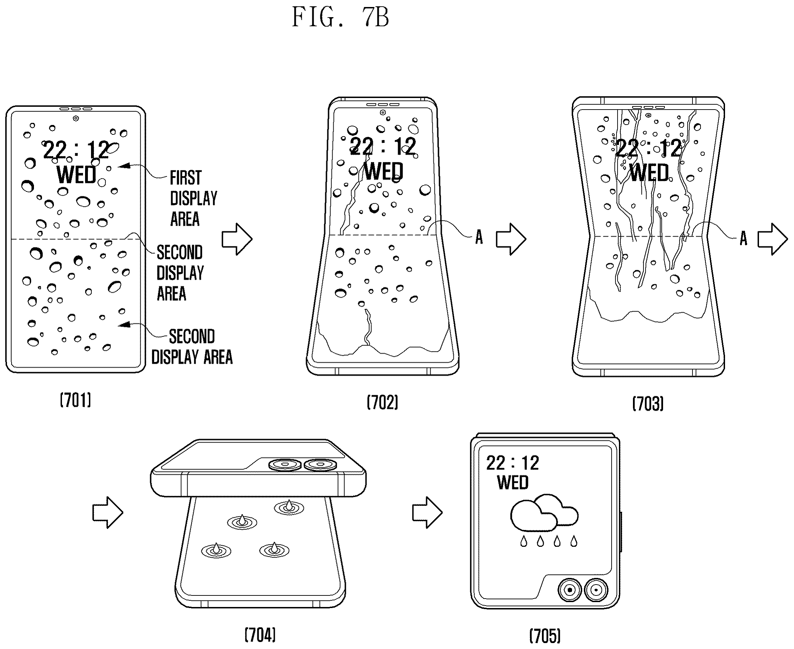

Referring to FIG. 7B, the foldable electronic device 101 may provide an eleventh user interface 701 in the unfolding state. The eleventh user interface 701 may display an image of raindrops forming across the entire area of the first display 230. While displaying the eleventh user interface 701, the second display 240 may be deactivated. That is, the background images on the first display 230 and the second display 240 are interlocked, and the first display 230 and second display 240 may not be activated simultaneously.

While displaying the eleventh user interface 701, the foldable electronic device 101 may transition from the unfolding state to the folding state (e.g., closing operation). The foldable electronic device 101 may provide a twelfth user interface 702, a thirteenth user interface 703, or a fourteenth user interface 704 according to the folding angle. The twelfth user interface 702 may show raindrops in the first display area moving slowly toward the second display area. The twelfth user interface 702 may displayed on the first display 230 in case that the folding angle between the first housing 210 and the second housing 220 is a fourth angle (e.g., between 100° and 150°). In the twelfth user interface 702, water from the raindrops may slowly accumulate in the second display area toward the folding axis A.

The thirteenth user interface 703 may show raindrops in the first display area sliding quickly toward the second display area. The thirteenth user interface 703 may be displayed on the first display 230 in case that the folding angle between the first housing 210 and the second housing 220 is a fifth angle (e.g., between 90° and 100°). In the thirteenth user interface 703, the second display area may fill with water rapidly.

The fourteenth user interface 704 may depict an effect of raindrops from the first display area dripping into the second display area. The fourteenth user interface 704 may be displayed on the first display 230 in case that the folding angle between the first housing 210 and the second housing 220 is a first angle (e.g., 60°). As the folding angle (10° to 90°) between the first housing 210 and the second housing 220 decreases, the water dripping location may expand, starting from the folding area, away from the folding area.

The foldable electronic device 101 may provide a fifteenth user interface 705 in the folding state (e.g., the folding angle between the first housing 210 and the second housing 220 is 0° to 10°). The fifteenth user interface 705 may include an image of cloudy weather with rain. The fifteenth user interface 705 may be displayed on the second display 240.

As an engaging feature, an example may be provided such that, when transitioning from the unfolding state to the folding state, the animation operates in the direction of gravity and, when transitioning from the folding state to the unfolding state, the animation operates in the reverse direction of gravity (e.g., reverse playback). For example, during the transition from the folding state to the unfolding state, the sequence may proceed from the fifteenth user interface 705 to the fourteenth user interface 704, then the thirteenth user interface 703, the twelfth user interface 702, and finally the eleventh user interface 701, depicting an effect of water droplets falling from the second display area to the first display area.

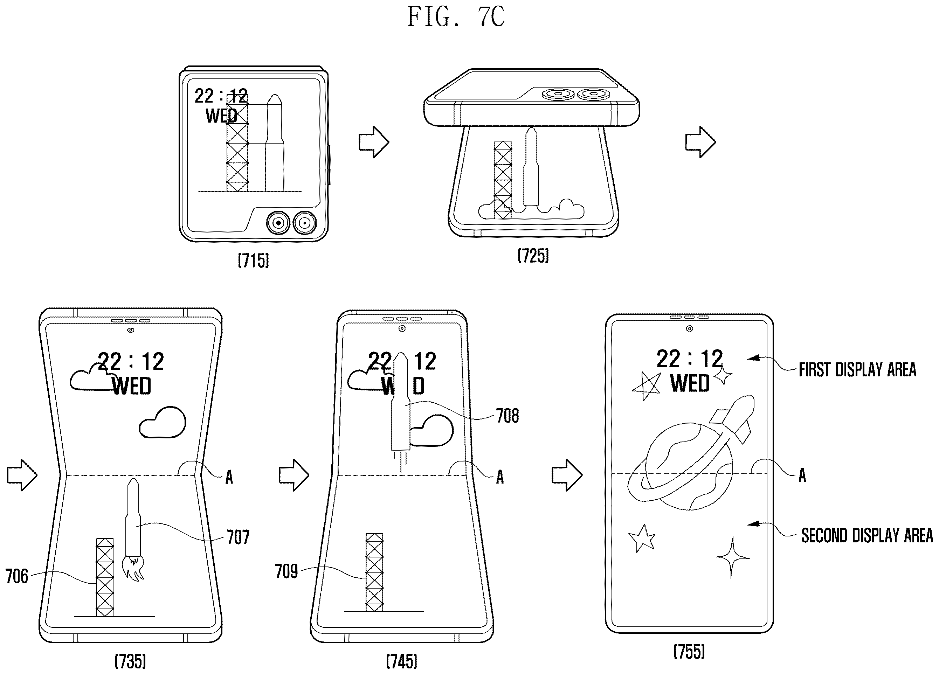

Referring to FIG. 7C, the foldable electronic device 101 may provide a twenty-first user interface 715 in the folding state (e.g., the folding angle between the first housing 210 and the second housing 220 is 0°). The twenty-first user interface 715 may displayed on the second display 240 and may include an image of a rocket before launch. While displaying the twenty-first user interface 715, the first display 230 may be deactivated. That is, the background images on the first display 230 and the second display 240 are interlocked, and the first display 230 and second display 240 may not be activated simultaneously.

While displaying the twenty-first user interface 715, the foldable electronic device 101 may transition from the folding state to the unfolding state (e.g., unfolding operation). The foldable electronic device 101 may provide a twenty-second user interface 725, a twenty-third user interface 735, or a twenty-fourth user interface 745 according to the folding angle. The twenty-second user interface 725 may include an image of a rocket launch beginning. The twenty-second user interface 725 may be displayed on the second display 240 in case that the folding angle between the first housing 210 and the second housing 220 is a sixth angle (e.g., less than 30°).

The twenty-third user interface 735 may include an image of a rocket gradually ascending. The rocket displayed in the second display area may rise toward the folding axis A. The twenty-third user interface 735 may be displayed on the first display 230 in case that the folding angle between the first housing 210 and the second housing 220 is a second angle (e.g., 90°).

The twenty-fourth user interface 745 may depict an image where the rocket's altitude increases as the angle expands. As the folding angle increases (e.g., from 90° to 100°), the ground structure may appear smaller, and the rocket may seem larger from a higher view, indicating a view change. The foldable electronic device 101 may change the viewpoint according to the folding angle, such as with the twenty-third user interface 735 to the twenty-fifth user interface 755.

The foldable electronic device 101 may display a twenty-fifth user interface 755 on the first display 230 in the unfolding state (e.g., the folding angle between the first housing 210 and the second housing 220 is 180°). The twenty-fifth user interface 755 may include an image of a rocket settled into orbit.

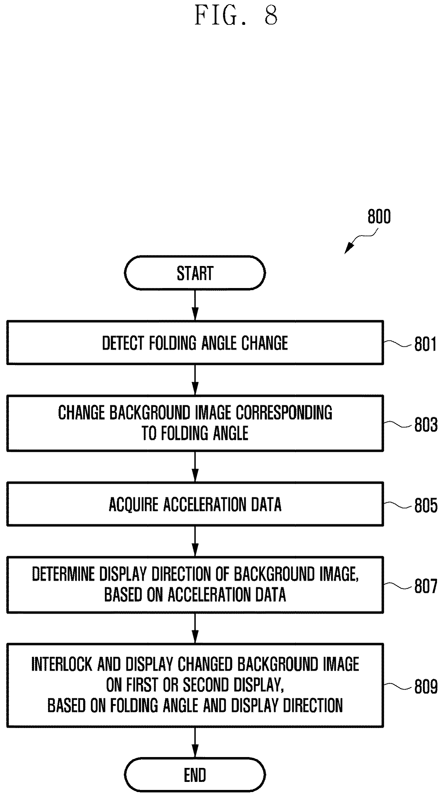

FIG. 8 is a flowchart 800 illustrating a method for changing and displaying a background image in a foldable electronic device according to an embodiment. FIG. 8 may be performed as part of operations 403 to 407 in FIG. 4.

Referring to FIG. 8, in operation 801, the processor (e.g., the processor 120 of FIG. 1) of the foldable electronic device (e.g., the electronic device 101 of FIG. 1) according to an embodiment may detect a change in the folding angle. The folding angle change may occur during a folding operation or an unfolding operation. The processor 120 may identify the folding state of the foldable electronic device 101 by using the sensor module (e.g., the sensor module 176 of FIG. 1) included in the foldable electronic device 101. The sensor module 176 may be included in at least one of the first housing (e.g., the first housing 210 of FIG. 2A to FIG. 2C) and the second housing (e.g., the second housing 220 of FIG. 2A to FIG. 2C). For example, the first housing 210 (or the second housing 220) may include a Hall sensor, and the second housing 220 (or the first housing 210) may include a magnetic body. The processor 120 may acquire sensing data from the Hall sensor to calculate the folding angle. The processor 120 may detect the folding angle change, based on the calculated folding angle.

In operation 803, the processor 120 may change the background image corresponding to the folding angle. The processor 120 may interlock and change the background image to be displayed on the first display (e.g., the first display 230 of FIG. 2A and FIG. 2C) or the second display (e.g., the second display 240 of FIG. 2A to FIG. 2C) according to the folding angle change. For example, in case that the angle between the first housing 210 and the second housing 220 is a first angle (e.g., greater than 110°), the processor 120 may change the image displayed on the first display 230 to a first background image (e.g., the second user interface 330 of FIG. 3), or may change the image displayed on the second display 240 to a second background image corresponding to the first background image. The first background image or the second background image may be configured by at least one of text, an image, or a video and may include an object motion.

According to an embodiment, in case that the angle between the first housing 210 and the second housing 220 is a second angle (e.g., less than 90°), the processor 120 may change the image displayed on the first display 230 to a third background image (e.g., the third user interface 350 of FIG. 3), or may change the image displayed on the second display 240 to a fourth background image corresponding to the third background image. The second angle may be less than the first angle. The third background image may be similar to the first background image but may have a changed (or different) degree of object motion (e.g., speed, change). The fourth background image may be similar to the second background image but may have a changed (or different) degree of object motion.

According to an embodiment, in case that the angle between the first housing 210 and the second housing 220 is a third angle (e.g., less than 60°), the processor 120 may change the image displayed on the first display 230 to a fifth background image (e.g., the fourth user interface 370 of FIG. 3) or may change the image displayed on the second display 240 to a sixth background image corresponding to the fifth background image. The third angle may be less than the second angle. The fifth background image may be similar to the first background image or the third background image but may have a changed (or different) degree of object motion (e.g., speed, change). The sixth background image may be similar to the second background image or the fourth background image but may have a changed (or different) degree of object motion.

In operation 805, the processor 120 may acquire acceleration data. The processor 120 may acquire acceleration data from the acceleration sensor in the sensor module 176. The processor 120 may determine whether the foldable electronic device 101 is in vertical direction or in the horizontal direction, based on the acquired acceleration data. For example, in case that the foldable electronic device 101 is in the vertical direction, referring to FIG. 2C, the two parallel short sides of the foldable electronic device 101 may be parallel to the ground. In case that the foldable electronic device 101 is in the horizontal direction, referring to FIG. 2C, the two parallel short sides of the foldable electronic device 101 may be perpendicular to the ground.

In operation 807, the processor 120 may determine the display direction of the background image, based on the acceleration data. The display direction of the background image may correspond to the foldable electronic device 101 being in the vertical direction or in the horizontal direction. For example, in case that the foldable electronic device 101 is placed in the vertical direction, the processor 120 may determine that the background image is to be displayed in the vertical direction. In case that the foldable electronic device 101 is placed in the horizontal direction, the processor 120 may determine that the background image is to be displayed in the horizontal direction. According to an embodiment, the processor 120 may also control (or determine) the motion direction of objects included in the background image, based on the determined display direction. For example, in case that the foldable electronic device 101 is in the vertical direction, the processor 120 may control the motion direction included in the background image to appear in the vertical direction. In case that the foldable electronic device 101 is placed in the horizontal direction, the processor 120 may control the motion direction included in the background image to appear in the horizontal direction.

In operation 809, the processor 120 may interlock and display the changed background image on the first or second display, based on the folding angle and the display direction. For example, in case that the angle between the first housing 210 and the second housing 220 is a first angle, and in case that the display direction is the vertical direction, the processor 120 may display the first background image on the first display 230 in the vertical direction or may display the second background image on the second display 240 in the vertical direction. In case that the angle between the first housing 210 and the second housing 220 is a second angle, and in case that the display direction is the vertical direction, the processor 120 may display the third background image on the first display 230 in the vertical direction or may display the fourth background image on the second display 240 in the vertical direction.

According to an embodiment, the horizontal/vertical display direction may not apply to the second display 240. The processor 120 may display the second background image or the fourth background image on the second display 240 in the horizontal direction even if the first background image or the third background image is displayed on the first display 230 in the vertical direction. In case that the angle between the first housing 210 and the second housing 220 is a third angle, and in case that the display direction is the vertical direction, the processor 120 may display the fifth background image on the first display 230 in the vertical direction or may display the sixth background image on the second display 240 in the vertical direction. The processor 120 may display objects included in the first, third to fifth background images so as to move in the vertical direction. The processor 120 may display objects included in the second, fourth to sixth background images so as to move in the horizontal direction.

According to an embodiment, in case that the angle between the first housing 210 and the second housing 220 is a first angle, and in case that the display direction is the horizontal direction, the processor 120 may display the first background image on the first display 230 in the horizontal direction or may display the second background image on the second display 240 in the horizontal direction. In case that the angle between the first housing 210 and the second housing 220 is a second angle, and in case that the display direction is the horizontal direction, the processor 120 may display the third background image on the first display 230 in the horizontal direction or may display the fourth background image on the second display 240 in the horizontal direction. In case that the angle between the first housing 210 and the second housing 220 is a third angle, and in case that the display direction is the horizontal direction, the processor 120 may display the fifth background image on the first display 230 in the horizontal direction or may display the sixth background image on the second display 240 in the horizontal direction. The processor 120 may display objects included in the first to sixth background images so as to move in the horizontal direction.

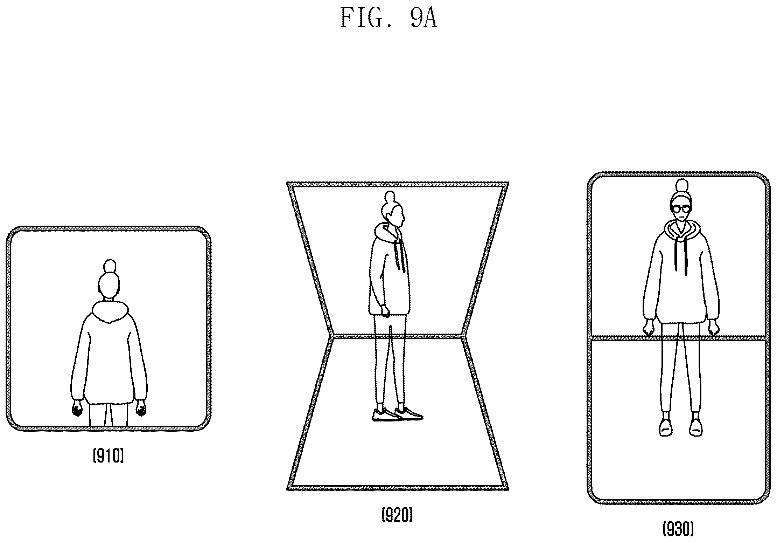

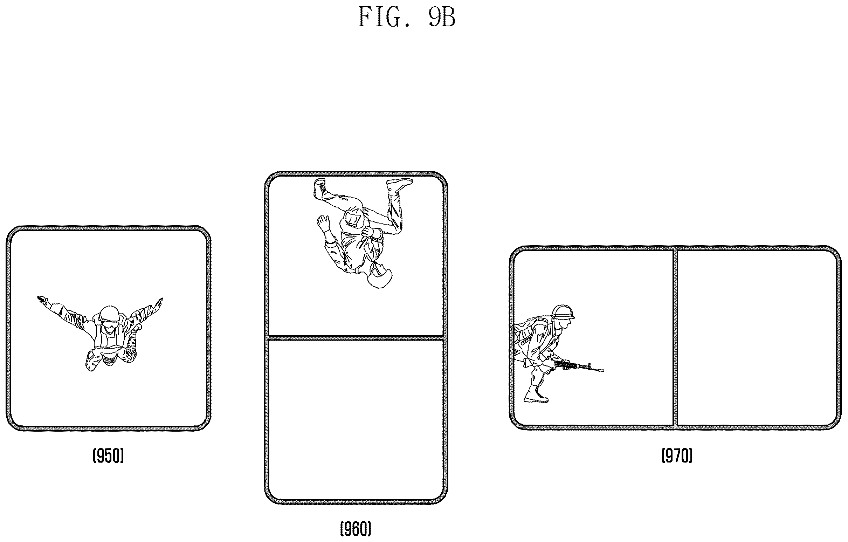

FIG. 9A and FIG. 9B illustrate an example of changing and displaying a background image according to folding angle and acceleration data in a foldable electronic device according to an embodiment.

Referring to FIG. 9A, the processor (e.g., the processor 120 of FIG. 1) of the foldable electronic device (e.g., the foldable electronic device 101 of FIG. 1) according to an embodiment may display a first user interface 910 in the folding state of the foldable electronic device 101. The first user interface 910 may be displayed on the second display (e.g., the second display 240 of FIG. 2A to FIG. 2C) disposed in the second direction (e.g., on the rear surface of the foldable electronic device 101) of the first housing (e.g., the first housing 210 of FIG. 2A to FIG. 2C) of the foldable electronic device 101. For example, the first user interface 910 may include a first background image including the rear view (e.g., backside) of a person. The first background image may be configured by at least one of text, an image, or a video. In the first background image, the person may be an object exhibiting a motion effect.

During the transition of the foldable electronic device 101 from a folding state to an unfolding state (e.g., unfolding action), the foldable electronic device 101 may display a second user interface 920 on the first display (e.g., the first display 230 of FIG. 2A and FIG. 2C), based on the folding angle. The first display 230 may be disposed in the first direction of the first housing 210 and the second housing 220 (e.g., on the front surface of the foldable electronic device 101). The second user interface 920 may include a second background image including the side view of a person. The second background image may include a dynamic image (e.g., a video) transitioning from the rear view to the side view of the person. The second background image may be similar to the first background image but may differ in the object's shape (e.g., the person's side view).

According to an embodiment, while displaying the second user interface 920 on the first display 230, the foldable electronic device 101 may deactivate the second display 240. Alternatively, while displaying the second user interface 920 on the first display 230, the foldable electronic device 101 may display a third background image including the side view of a person on the second display 240. The third background image may be identical to the second background image.

According to an embodiment, as the folding angle of the foldable electronic device 101 gradually increases (e.g., 60° to 90°), the background image may change to depict the person's rear view transitioning to the side view, and as the folding angle further increases (e.g., 90° to 120°), the background image may change to depict the side view transitioning to the front view.

Upon completing the unfolding operation, the foldable electronic device 101 may provide a third user interface 930 in the unfolding state. The third user interface 930 may be displayed on the first display 230 of the foldable electronic device 101. For example, the third user interface 930 may include a fourth background image including the front view of a person. The fourth background image may be similar to the first background image and the second background image but may differ in the object's shape (e.g., the person's front view). In the third user interface 930, the person may be an object exhibiting a motion effect, which may no longer involve movements of the person's shape.

According to an embodiment, while displaying the third user interface 930 on the first display 230, the foldable electronic device 101 may deactivate the second display 240. Alternatively, while displaying the third user interface 930 on the first display 230, the foldable electronic device 101 may display a fifth background image including the front view of a person on the second display 240. The fifth background image may be identical to the fourth background image.

Referring to FIG. 9B, the foldable electronic device 101 may provide a fourth user interface 950 in the folding state. The fourth user interface 950 may be displayed on the second display 240. For example, the fourth user interface 950 may include a sixth background image depicting an effect of a person falling downward from above (e.g., from the sky to the ground) (e.g., skydiving). The sixth background image may be configured by at least one of text, an image, or a video. In the sixth background image, the person may be an object exhibiting a motion effect.

The foldable electronic device 101 may display a fifth user interface 960 or a sixth user interface 970 on the first display 230, based on the folding angle (e.g., unfolding state) and the display direction. The fifth user interface 960 may be displayed on the first display 230 in case that the foldable electronic device 101 is in the unfolding state and is placed in the vertical direction. The fifth user interface 960 may include a seventh background image depicting an effect of a person appearing to hang upside down in the first display area of the first display 230. The first display area may correspond to the first surface 211 of the first housing 210.

The sixth user interface 970 may be displayed on the first display 230 in case that the foldable electronic device 101 is in the unfolding state and is placed in the horizontal direction. The sixth user interface 970 may include an eighth background image depicting an effect of a person appearing from the side in the first display area of the first display 230. The eighth background image may be similar to the seventh background image but may differ in the position or direction in which the object is disposed, according to the display direction. When viewed with reference to the direction in which the foldable electronic device 101 is placed, the person (e.g., object) in the seventh background image may be disposed on the upper side of the first display 230, and the person in the eighth background image may be positioned on the left side of the first display 230.

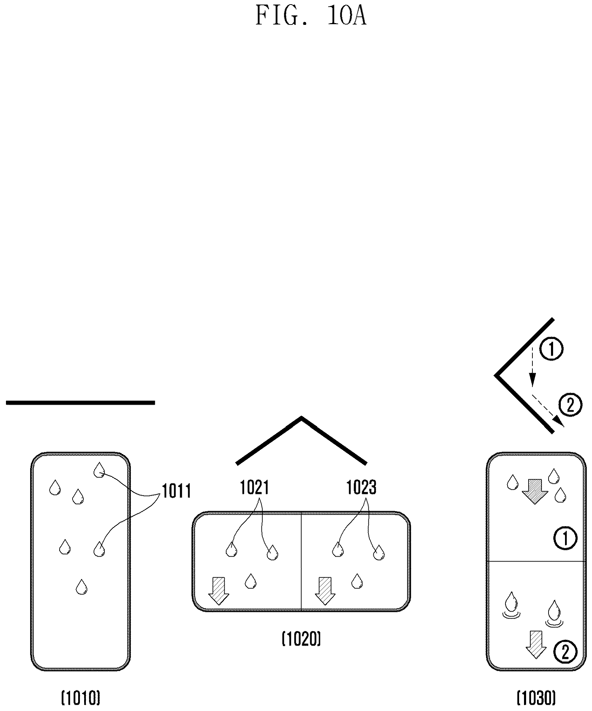

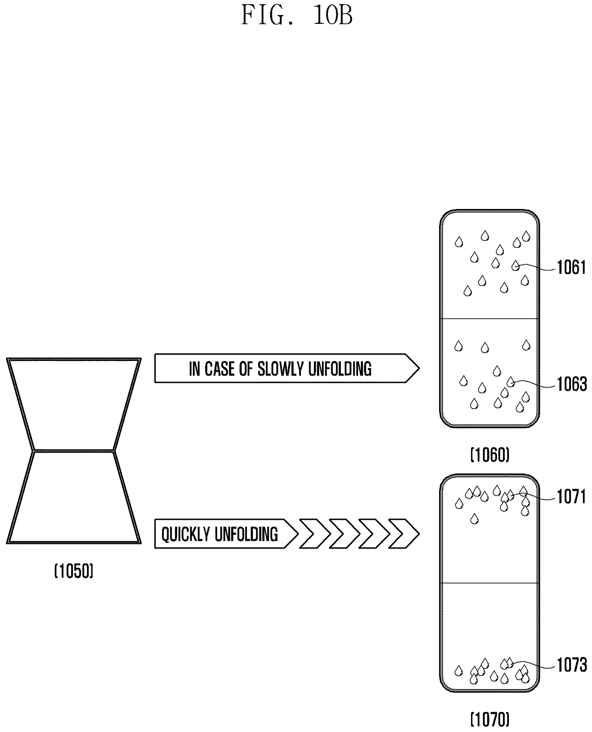

FIG. 10A and FIG. 10B illustrate an example of changing and displaying a background image according to the folding angle and acceleration data in a foldable electronic device according to an embodiment.

Referring to FIG. 10A, the processor (e.g., the processor 120 of FIG. 1) of the foldable electronic device (e.g., the foldable electronic device 101 of FIG. 1) according to an embodiment may display a first user interface 1010 on the first display (e.g., the first display 230 of FIG. 2A and FIG. 2C) in the unfolding state of the foldable electronic device 101. The first user interface 1010 may include a first background image showing water drops across the entire screen. The first background image may not include a motion effect of object 1011. That is, the water drops may appear stationary.

The processor 120 may display a second user interface 1020 or a third user interface 1030 on the first display 230, based on the folding angle of the foldable electronic device 101 and the direction of gravity. The second user interface 1020 may be displayed on the first display 230 in case that the foldable electronic device 101 is in an intermediate state and is placed in the horizontal direction. The second user interface 1020 may include a second background image depicting an effect where water drops 1021 displayed in the first display area of the first display 230 and water drops 1023 displayed in the second display area of the first display 230 appear to fall toward the ground (e.g., in the direction of gravity). The first display area may correspond to the first surface 211 of the first housing 210, and the second display area may correspond to the second surface 221 of the second housing 220.

The third user interface 1030 may be displayed on the first display 230 in case that the foldable electronic device 101 is in the intermediate state, and in case that the user holds the foldable electronic device 101 tilted. The third user interface 1030 may include a third background image depicting an effect where water drops in the first display area (e.g., ①) of the first display 230 fall into the second display area (e.g., ②) of the first display 230, and the water drops that fall into the second display area roll toward the ground along the tilt of the second display area. The third background image may be similar to the second background image but may differ in the position or direction in which the object is disposed, according to the folding angle and the direction of gravity. The processor 120 may display the position or direction in which the water drops fall in the third background image differently from the second background image, considering the actual tilt corresponding to the direction of gravity since the user holds the foldable electronic device 101 tilted.

Referring to FIG. 10B, the processor 120 according to an embodiment may display a fourth user interface 1060 or a fifth user interface 1070 on the first display 230, based on the rate of change of the folding angle, during the transition of the foldable electronic device 101 from the intermediate state 1050 to an unfolding state. The fourth user interface 1060 may be displayed on the first display 230 in case that the foldable electronic device 101 is in the intermediate state, and in case that the user unfolds the foldable electronic device 101 slowly in the vertical direction. The fourth user interface 1060 may include a fourth background image depicting an effect where water drops 1061 displayed in the first display area of the first display 230 and water drops 1063 displayed in the second display area of the first display 230 appear to spread slowly.

The fifth user interface 1070 may be displayed on the first display 230 in case that the foldable electronic device 101 is in the intermediate state, and in case that the user unfolds the foldable electronic device 101 quickly in the vertical direction. The fifth user interface 1070 may include a fifth background image depicting an effect where water drops 1071 displayed on the upper side of the first display area of the first display 230 and water drops 1073 on the lower side of the second display area of the first display 230 appear to spread rapidly. The fifth background image may be similar to the fourth background image but may differ in the position or direction which the object (e.g., waterdrops) is disposed, according to the rate of change of the folding angle.

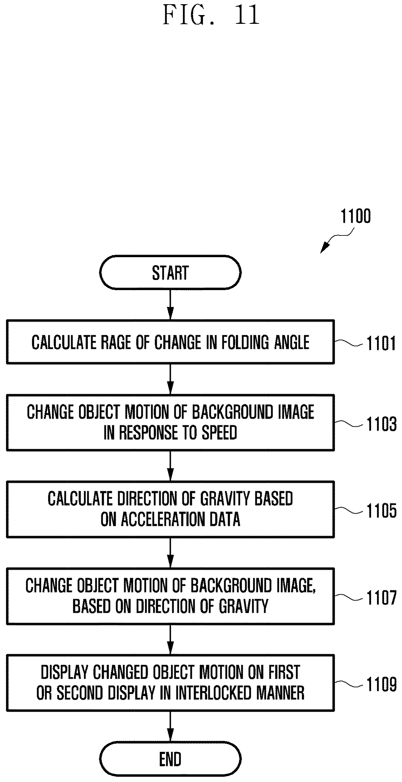

FIG. 11 is a flowchart 1110 illustrating a method for changing and displaying an object motion of a background image in a foldable electronic device according to an embodiment. FIG. 11 may be performed as part of operations 403 to 407 in FIG. 4.

Referring to FIG. 11, in operation 1101, the processor (e.g., the processor 120 of FIG. 1) of the foldable electronic device (e.g., the foldable electronic device 101) according to an embodiment may calculate the rate of change in the folding angle. The processor 120 may identify the folding state of the foldable electronic device 101 by using the sensor module (e.g., the sensor module 176 of FIG. 1) included in the foldable electronic device 101. The sensor module 176 may be included in at least one of the first housing (e.g., the first housing 210 of FIG. 2A to FIG. 2C) and the second housing (e.g., the second housing 220 of FIG. 2A to FIG. 2C). For example, the first housing 210 (or the second housing 220) may include a Hall sensor, and the second housing 220 (or the first housing 210) may include a magnetic body. The processor 120 may periodically acquire sensing data from the Hall sensor to calculate the folding angle. The processor 120 may calculate the rate of change in the folding angle (e.g., the amount of change in the folding angle), based on the calculated folding angle.

In operation 1103, the processor 120 may change the object motion of the background image according to the speed. The background image may include at least one of text, an image, or a video. For example, in case that the background image is a moving image, a moving object may be included in the background image. For example, in case that the user folds (or unfolds) the foldable electronic device 101 at a high speed, the processor 120 may change the object motion of the background image such that the object moves quickly. In case that the user folds (or unfolds) the foldable electronic device 101 at a low speed, the processor 120 may change the object motion of the background image such that object moves slowly.

In operation 1105, the processor 120 may calculate the direction of gravity, based on acceleration data. The processor 120 may acquire acceleration data from the acceleration sensor included in the sensor module 176. The processor 120 may calculate the direction of gravity, based on the acquired acceleration data. The user may hold the foldable electronic device 101 or place the same on a desk or a shelf. The processor 120 may calculate the direction of gravity in consideration of the state in which the foldable electronic device 101 is held or placed.

In operation 1107, the processor 120 may change the object motion of the background image according to the direction of gravity. For example, in case that the user holds the foldable electronic device 101 in the unfolding state with the two short sides (e.g., with reference to FIG. 2C) parallel to the ground (e.g., in the vertical direction), the processor 120 may change the object motion toward the bottom of the second display area (e.g., toward the ground) of the first display (e.g., the first display 230 of FIG. 2A and FIG. 2C). The first display area of the first display 230 may correspond to the first surface 211 of the first housing 210, and the second display area may correspond to the second surface 221 of the second housing 220.

In case that the user holds the foldable electronic device 101 in the unfolding state with the two short sides perpendicular to the ground (e.g., in the horizontal direction), the processor 120 may change the object motion toward the bottom of the first display area and the bottom of the second display area (that is, toward the ground). In case that the user tilts the angle between the foldable electronic device 101 and the user in the unfolding state of the foldable electronic device 101, the object motion may be changed in consideration of the tilt. For example, in case that the user tilts one short side of the foldable electronic device 101 toward the user, the processor 120 may change the object so as to move toward the user in consideration of the tilt between the foldable electronic device 101 and the user. Conversely, in case that the user tilts one short side of the foldable electronic device 101 away from the user, the processor 120 may change the object so as to move away from the user in consideration of the tilt between the foldable electronic device 101 and the user.

In operation 1109, the processor 120 may interlock and display the changed object motion on the first display 230 or the second display (e.g., the second display 240 of FIG. 2A to FIG. 2C). For example, the processor 120 may change and display the object motion of the background image, based on at least one of the rate of change in the folding or unfolding angle, the direction of gravity, and display direction of the foldable electronic device 101. For example, in case that user quickly folds the foldable electronic device 101 from the unfolding state in the vertical direction, the processor 120 may display a first background image. In case that the user slowly unfolds the foldable electronic device 101 from the intermediate state in the horizontal direction, the processor 120 may display a second background image. The first background image and the second background image may change and display the object motion differently due to differences in the rate of change in the folding or unfolding angle, the direction of gravity, and display direction of the foldable electronic device 101.

According to an embodiment, the processor 120 may change and display the object motion of the first background image on the first display 230, based on at least one of the rate of change in the folding or unfolding angle, the direction of gravity, and display direction of the foldable electronic device 101, and may simultaneously display a third background image that is identical or similar to the first background image on the second display 240.

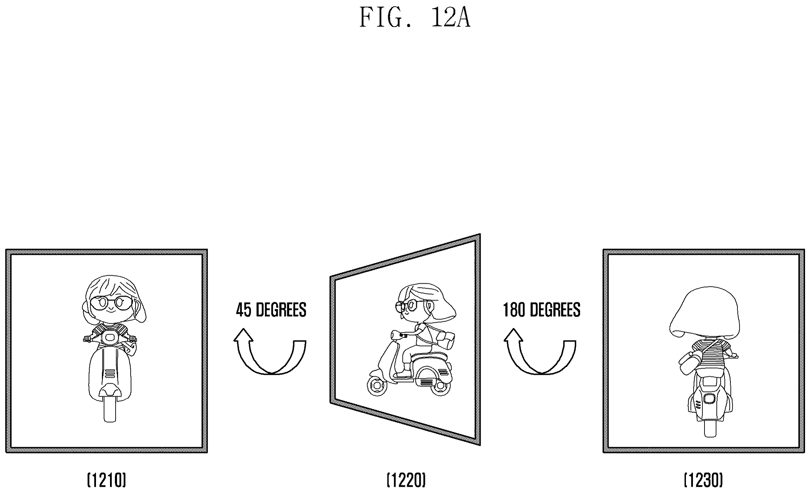

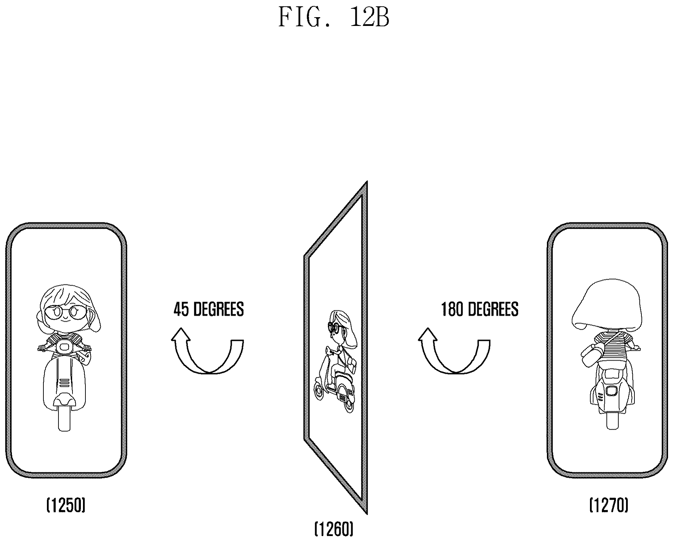

FIG. 12A and FIG. 12B are diagrams illustrating an example of changing and displaying a background image, based on the angle with the user, in a foldable electronic device according to an embodiment.

Referring to FIG. 12A, the processor (e.g., the processor 120 of FIG. 1) of the foldable electronic device (e.g., the electronic device 101 of FIG. 1) according to an embodiment may display a first user interface 1210 in the unfolding state of the foldable electronic device 101. The first user interface 1210 may be displayed on the first display 230 (e.g., the first display 230 of FIG. 2A and FIG. 2C) disposed in the first direction (e.g., on the front surface of the foldable electronic device 101) of the first housing (e.g., the first housing 210 of FIG. 2A to FIG. 2C) and the second housing (e.g., the second housing 220 of FIG. 2A to FIG. 2C) of the foldable electronic device 101. For example, the first user interface 1210 may be displayed on the first display 230 when the user faces the front surface of the foldable electronic device 101. The first user interface 1210 may include a first background image including the front view (e.g., frontside) of a person riding a motorcycle. The first background image may be configured by at least one of text, an image, or a video. In the first background image, the person may be an object exhibiting a motion effect.

The foldable electronic device 101 may display a second user interface 1220 on the first display 230, based on the tilt between the foldable electronic device 101 and the user (or the angle with the user). For example, in case that the user, facing the front surface of the foldable electronic device 101, rotates the front surface of the foldable electronic device 101 to the left (e.g., 45°) relative to the user, the foldable electronic device 101 may display the second user interface 1220, based on the tilt between the foldable electronic device 101 and the user. The second user interface 1220 may include a second background image including the side view (e.g., right side) of a person riding a motorcycle. The second background image may be identical or similar to the first background image, but the angle (or shape) of the object may differ.

Alternatively, in case that the user, facing the front surface of the foldable electronic device 101, rotates the front surface of the foldable electronic device 101 to the right (e.g., -45°) relative to the user, the foldable electronic device 101 may display a background image including the left side of a person riding a motorcycle based on the tilt between the foldable electronic device 101 and the user.

In case that the user fully rotates the foldable electronic device 101 to the left (e.g., 180°) such that the first display 230 is no longer visible while the second user interface 1220 is displayed, the foldable electronic device 101 may display a third user interface 1230 on the first display 230. The third user interface 1230 may include a third background image including the rear view (e.g., backside) of a person riding a motorcycle. The third background image may be identical or similar to the first background image or the second background image, but the angle (or shape) of the object may differ.

According to an embodiment, in case that the user fully rotates the foldable electronic device 101 to the left (e.g., 180°), the user may view the second display (e.g., the second display 240 of FIG. 2A to FIG. 2C) disposed in the second direction (e.g., on the rear surface of the foldable electronic device 101) of the first housing 210. The foldable electronic device 101 may display a fourth background image, on the second display 240, including the rear view (e.g., backside) of a person riding a motorcycle. The fourth background image may be identical to the third background image, but the object size may differ to match the display size.

Referring to FIG. 12B, the processor 120 may display a fourth user interface 1250 in the folding state of the foldable electronic device 101. The fourth user interface 1250 may be displayed on the second display 240 while the user faces the second display 240 of the foldable electronic device 101. The fourth user interface 1250 may include a fifth background image including the front view (e.g., frontside) of a person riding a motorcycle. The fifth background image may be configured by at least one of text, an image, or a video. In the fifth background image, the person may be an object exhibiting a motion effect. The fifth background image may be identical to the first background image.

The foldable electronic device 101 may display a fifth user interface 1260 on the second display 240, based on the tilt between the foldable electronic device 101 and the user (or the angle with the user). For example, in case that the user, facing the second display 240 of the foldable electronic device 101, rotates the foldable electronic device 101 to the left (e.g., 45°) relative to the user, the foldable electronic device 101 may display the fifth user interface 1260, based on the tilt between the foldable electronic device 101 and the user. The fifth user interface 1260 may include a sixth background image including the side view (e.g., right side) of a person riding a motorcycle. The sixth background image may be identical or similar to the fifth background image, but the angle (or shape) of the object may differ.

Alternatively, in case that the user, facing the second display 240 of the foldable electronic device 101, rotates the foldable electronic device 101 to the right (e.g., -45°) relative to the user, the foldable electronic device 101 may display a background image including the left side of a person riding a motorcycle, based on the tilt between the foldable electronic device 101 and the user.

In case that the user fully rotates the foldable electronic device 101 to the left (e.g., 180°) such that the second display 240 is no longer visible while the fifth user interface 1260 is displayed, the foldable electronic device 101 may display a sixth user interface 1270 on the first display 230. The sixth user interface 1270 may include a seventh background image including the rear view (e.g., backside) of a person riding a motorcycle. The seventh background image may be identical or similar to the fifth background image or the sixth background image, but the angle (or shape) of the object may differ.

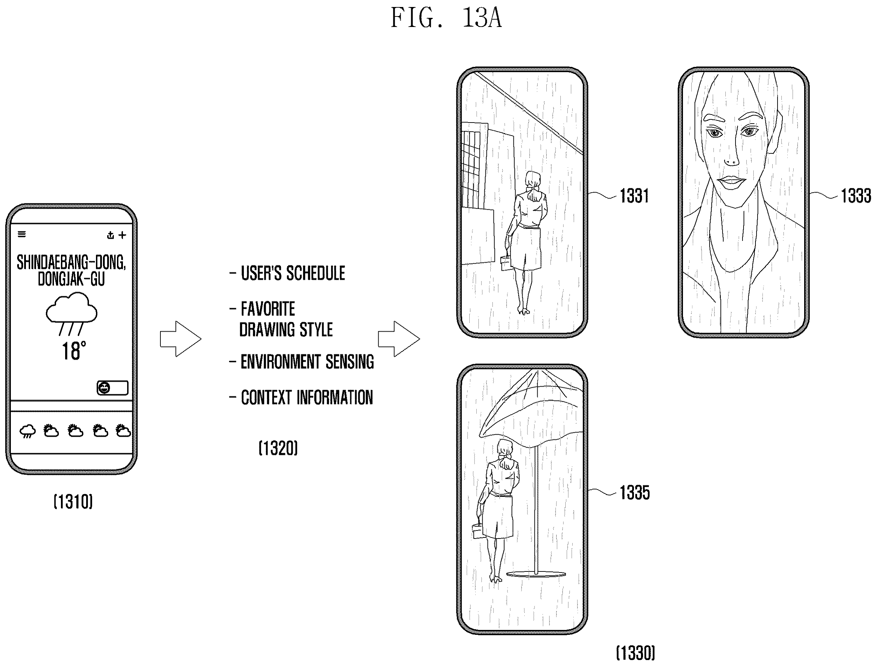

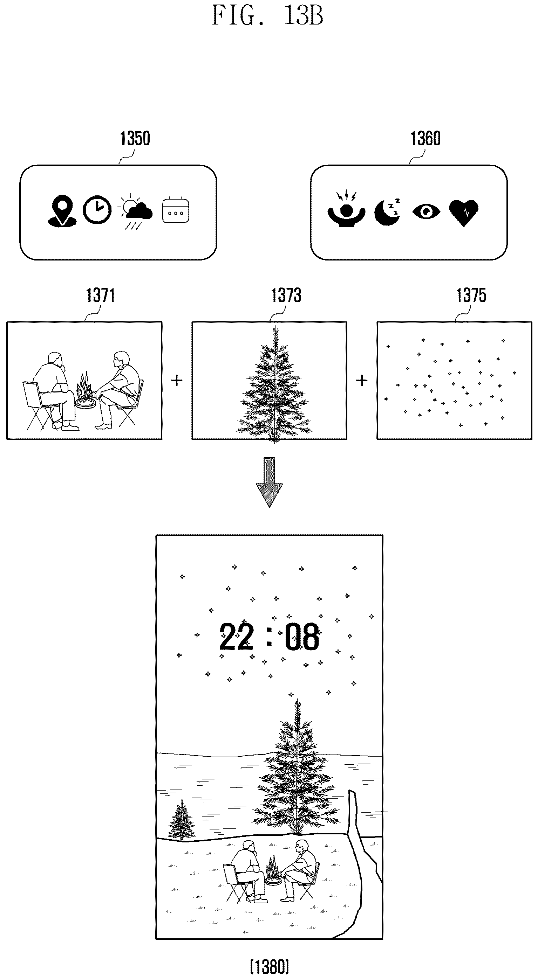

FIG. 13A and FIG. 13B are diagrams illustrating an example of generating a background image, based on context data and biometric information, in a foldable electronic device according to an embodiment.

Referring to FIG. 13A, the processor (e.g., the processor of FIG. 1) of the foldable electronic device (e.g., the electronic device 101 of FIG. 1) according to an embodiment may display a first user interface 1310. The first user interface 1310 may be displayed on the first display (e.g., the first display 230 of FIG. 2A and FIG. 2C) or the second display (e.g., the second display 240 of FIG. 2A to FIG. 2C). The first display 230 may be disposed in the first direction (e.g., on the front surface of the foldable electronic device 101) of the first housing (e.g., the first housing 210 of FIG. 2A to FIG. 2C) and the second housing (e.g., the second housing 220 of FIG. 2A to FIG. 2C) of the foldable electronic device 101. The second display 240 may be disposed in the second direction (e.g., on the rear surface of the foldable electronic device 101) of the first housing 210 of the foldable electronic device 101. The first user interface 1310 may include a first image (or a background image) considering the location or weather of the foldable electronic device 101.

The processor 120 may generate a second image which is desired by the user/contextually appropriate through generative AI, based on at least one of the user's biometric information, the user's schedule, the user's preferences (e.g., user taste), environmental information (e.g., weather), or context information 1320 (e.g., location, time). For example, the second image may include a (2-1)^{th} image 1331, a (2-2)^{th} image 1333, and a (2-3)^{th} image 1335. The (2-1)^{th} image 1331 may be generated based on the user's biometric information indicating a depressed mood and environmental information showing rain. The (2-2)^{th} image 1333 may be generated considering a photo the user likes (e.g., frequently viewed photo, high share count), the user's state (e.g., elevated heart rate), or current weather (e.g., rain). The (2-3)^{th} image 1335 may be generated considering a photo of an actor the user likes, current location, or current weather (e.g., rain). The (2-1)^{th} image 1331 and the (2-3)^{th} image 335 may feature the same female photo but with different backgrounds. This is because the (2-1)^{th} image 1331 and the (2-3)^{th} image are generated differently based on the user's biometric information, location, time, weather, user taste, and captured content and, if at least one of the user's biometric information, location, time, weather, user taste, and captured content differs, the (2-1)^{th} image 1331, the (2-2)^{th} image 1333, and the (2-3)^{th} image 1335 may differ in subject or background.

The processor 120 may configure the generated second image as the background image for the first display 230 and the second display 240. The processor 120 may generate a second image appropriate for the situation, based on context data (e.g., schedule, location, weather) or the user's biometric information, in real time without a user request and may configure the generated second image as the background image for the first display 230 and the second display 240.

Referring to FIG. 13B, the processor 120 may collect context data 1350, such as usage history of applications (e.g., music, health, messages), schedule, and environmental information, and the user's biometric information 1360. The context data 1350 may include at least one of the current location, the current time, the current weather, and the user's schedule. Alternatively, the processor 120 may collect the user's preferences (or taste), such as the user's favorite colors or drawing styles. The biometric information 1360 may include biometric data such as stress index, sleep duration, and heart rate.

In addition, the processor 120 may extract (or identify) photos that the user frequently views or photos that are shared frequently, reflecting the user's preferences (or taste). For example, the processor 120 may extract a first image 1371, a second image 1373, or a third image 1375 based on the user's preferences (or taste).

The processor 120 may generate a new image 1380, based on the context data 1350, the user's biometric information 1360, and the extracted images 1371, 1373, and 1375. The new image 1380 may include at least one of text, an image, or a video. The new image 1380 may be obtained by combining the images 1371, 1373, and 1375 extracted to match the context data 1350 and the user's biometric information 1360, out-painting other parts, and optimizing the layout. The processor 120 may generate a new image using an out-painting technique and may optimize the layout of the new image such that the new image does not overlap with important display areas (e.g., clock) of the home screen.

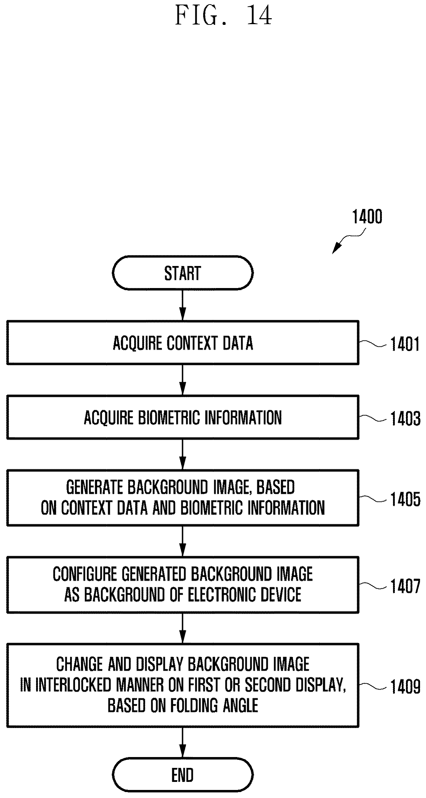

FIG. 14 is a flowchart 1400 illustrating a method for generating a background, changing the generated background image according to the folding angle, and displaying the same in a foldable electronic device according to an embodiment. FIG. 14 may be may be performed as part of operations 403 to 407 of FIG. 4.

Referring to FIG. 14, in operation 1401, the processor (e.g., the processor 120 of FIG. 1) of the foldable electronic device (e.g., the electronic device of FIG. 1) according to an embodiment may acquire (or collect) context data. The context data may include at least one of the usage history of applications, the location, the time, the weather, and the user's schedule. For example, the processor 120 may collect context data indicating that on January 21, 2023, at 8:00 PM in Seoul, there was a gathering with friends, during which certain applications (e.g., camera, SNS) were used, and the weather was clear. The processor 120 may extract (or identify) photos acquired (e.g., captured, downloaded) during the gathering.

In operation 1403, the processor 120 may acquire biometric information. The processor 120 may obtain the user's biometric information from a health (or exercise) application, such as the step count, the heart rate, or the stress index. Alternatively, the processor 120 may acquire biometric information from an external device (e.g., a wearable device) connected to the foldable electronic device 101.

In operation 1405, the processor 120 may generate a background image based on the context data and biometric information. For example, the processor 120 may generate a background image using a photo taken with friends, based on the current location (e.g., Seoul), the user's schedule, the user's state (e.g., normal stress index), and weather (e.g., clear). According to an embodiment, upon receiving a call, message, or push notification from a counterpart (e.g., a person or service), the processor 120 may receive the counterpart's background image from the counterpart electronic device. The counterpart's background image may be generated by the counterpart's electronic device based on the counterpart's state (e.g., the counterpart's context data such as the meeting place, gathering, weather, and photo, and the counterpart's biometric information). Alternatively, when sending a call or message to the counterpart, the processor 120 may transmit a background image generated based on the user's context data and biometric information to the counterpart's electronic device.

In operation 1407, the processor 120 may configure the generated background image as the background of the foldable electronic device 101. The processor 120 may generate the background image in real time without a user request and configure the generated background image as the background of the foldable electronic device 101.

In operation 1409, the processor 120 may change and display the background image in an interlocked manner on the first display (e.g., the first display 230 of FIG. 2A and FIG. 2C) or the second display (e.g., the second display 240 of FIG. 2A to FIG. 2C), based on a change in the folding angle. The first display 230 may be disposed in the first direction (e.g., on the front surface of the foldable electronic device 101) of the first housing (e.g., the first housing 210 of FIG. 2A to FIG.2C) and the second housing (e.g., the second housing 220 of FIG. 2A to FIG. 2C) of the foldable electronic device 101. The second display 240 may be disposed in the second direction (e.g., on the rear surface of the foldable electronic device 101) of the first housing 210 of the foldable electronic device 101. For example, the processor 120 may display the generated background image on the first display 230 and the second display 240 in an interlocked manner according to a change in the folding angle, as in FIG. 7A to FIG. 7C.

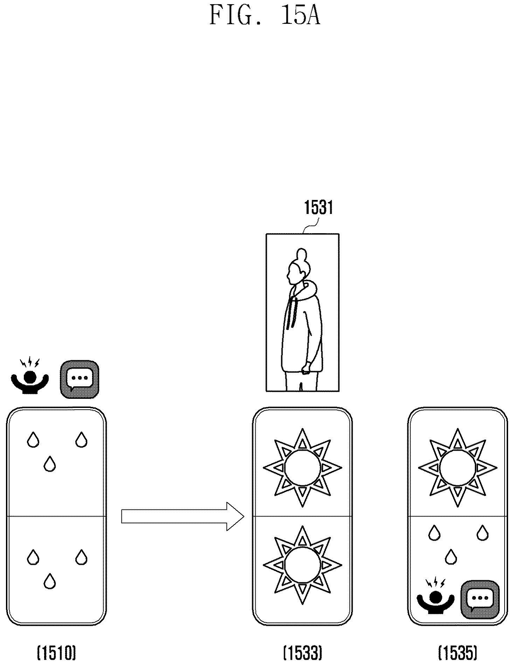

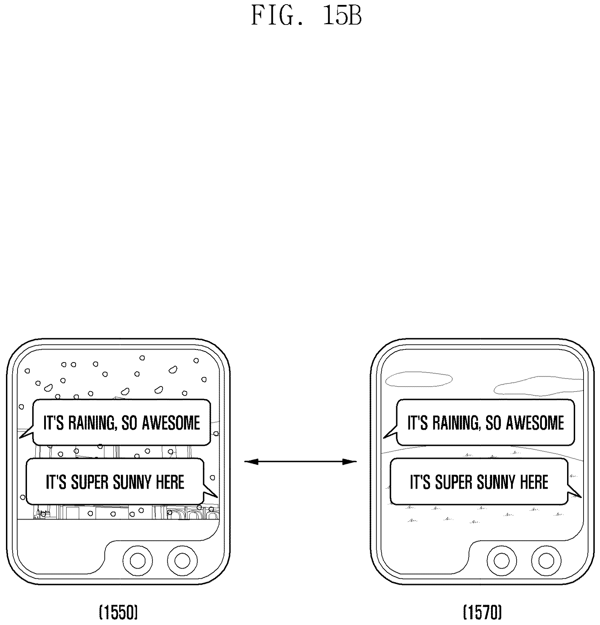

FIG. 15A and FIG. 15B are diagrams illustrating an example of generating a background image, based on messages, in a foldable electronic device according to an embodiment.

Referring to FIG. 15A, upon receiving a call, message, or push notification from a counterpart (e.g., a person or service), the processor (e.g., the processor 120 of FIG. 1) of the foldable electronic device (e.g., the electronic device of FIG. 1) according to an embodiment may receive the counterpart's background image 1510 from the counterpart device. The counterpart's background image 1510 may be generated by the counterpart electronic device, based on the counterpart's state (e.g., the counterpart's context data such as the meeting place, gathering, weather, and photo, and the counterpart's biometric information). The counterpart's background image 1510 may include a moving image of rain on a cloudy day or reflect a high stress index of the counterpart. The counterpart's background image 1510 may include at least one of text, an image, or a video. The user of the foldable electronic device 101 may assess the counterpart's state (or mood) by viewing the counterpart's background image 1510. The processor 120 may understand the message context between the counterpart and the user and may generate a background image that better expresses (or supports) the text content of the message.

For example, the processor 120 may generate new background images 1531, 1533, and 1535 to better express the text content of the message, based on at least one of the counterpart's background image 1510, the message content between the counterpart and the user, the user's context data, or the user's biometric information. The first background image 1531 may be a side profile photo of the user, the second background image 1533 may indicate the user's good state, and the third background image 1535 may include both the user's and the counterpart's states. The processor 120 may display the new background images 1531, 1533, and 1535 on the first display (e.g., the first display 230 of FIG. 2A and FIG. 2C) and the second display (e.g., the second display 240 of FIG. 2A to FIG. 2C). For example, the processor 120 may display the first background image 1531 on the first display 230 and may display the second background image 1535 on the second display 240, in the unfolding state of the foldable electronic device 101.

Referring to FIG. 15B, while the counterpart and the user are exchanging messages, the counterpart electronic device may display a fourth background image 1550 on the display, and the processor 120 may display a fifth background image 1570 on the second display 240. The fourth background image 1550 may be generated to better express the text content of the message by considering the message content between the counterpart and the user, the other counterpart's context data, and the counterpart's biometric information. The fifth background image 1570 may be generated to better express the text content of the message by considering the message content between the other party and the user, the user's context data, and the user's biometric information. Conversely, the fourth background image 1550 may be generated to better express the text content of the message by considering the message content between the counterpart and the user, the user's context data, and the user's biometric information, and the fifth background image 1570 may be generated to better express the text content of the message by considering the message content between the counterpart and the user, the counterpart's context data, and the counterpart's biometric information.

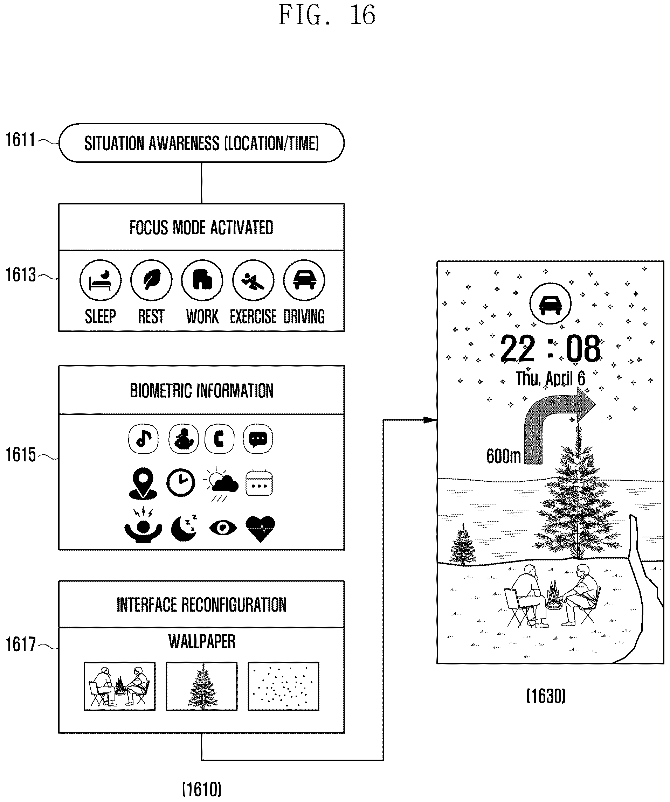

FIG. 16 is a diagram illustrating an example of generating a background image, based on context data and biometric information, in a foldable electronic device according to an embodiment.

Referring to FIG. 16, the processor (e.g., the processor 120 of FIG. 1) of the foldable electronic device (e.g., the electronic device of FIG. 1) according to an embodiment may collect (1610) at least one of situation (e.g., current location, current time) awareness 1611, the user's mode 1613, biometric information 1615, or photos 1617. The processor 120 may determine the theme of background images according to the situation awareness 1611, the user's mode 1613, or biometric information 1615, or may determine various themes according to the user's mode 1613. The processor 120 may generate a theme of one background image according to various user modes such as sleep, rest, work, exercise, or driving, or may determine multiple themes for one user mode.

The processor 120 may configure a driving background image 1630, based on the collected information. The processor 120 may display the background image 1630 on the first display (e.g., the first display 230 of FIG. 2A and FIG. 2C) and the second display (e.g., the second display 240 of FIG. 2A to FIG. 2C) in the unfolding state of the foldable electronic device 101.

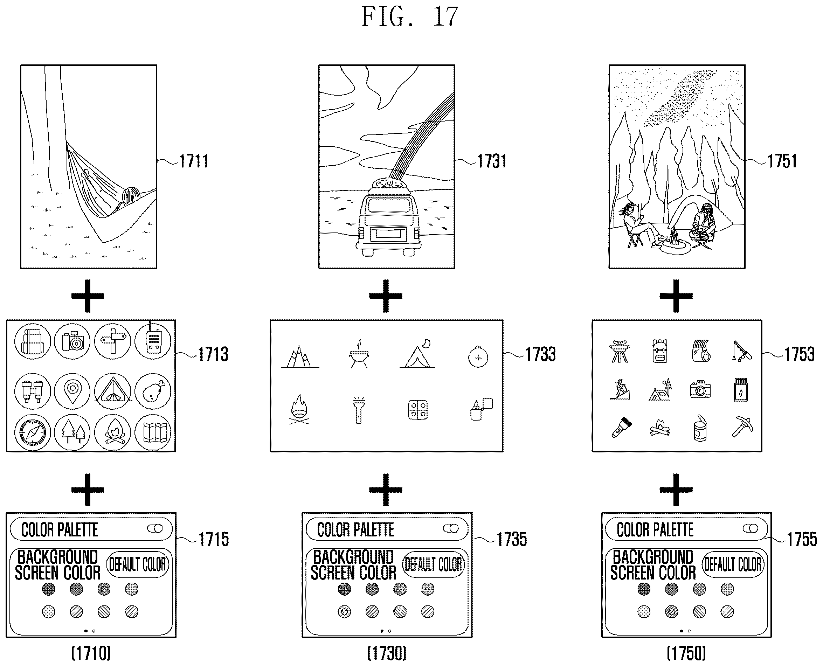

FIG. 17 is a diagram illustrating an example of generating a background image, based on context data and biometric information, in a foldable electronic device according to an embodiment.

Referring to FIG. 17, the processor (e.g., the processor 120 of FIG. 1) of the foldable electronic device (e.g., the electronic device of FIG. 1) according to an embodiment may generate a first background image in consideration of the user's biometric information 1713 and the user's preferences 1715 in case that the current time is daytime and the user's mode is a rest mode 1711. The processor 120 may generate a second background image in consideration of the user's biometric information 1733 and the user's preferences 1735 in case that the user's mode is a travel mode 1731. The processor 120 may generate a third background image in consideration of the user's biometric information 1753 and the user's preferences 1755 in case that the current time is nighttime and the user's mode is a travel mode 1751.

The processor 120 may display the generated background images (e.g., the first background image to the third background image) on the first display (e.g., the first display 230 of FIG. 2A and FIG. 2C) and the second display (e.g., the second display 240 of FIG. 2A to FIG. 2C) in the unfolding state of the foldable electronic device 101.

A method for operating a foldable electronic device 101 including a first housing 210 and a second housing 220 disposed on both sides with reference to a folding axis and configured to fold with respect to each other, according to an embodiment of the disclosure, may include: an operation of identifying a folding state of the foldable electronic device; detecting a change in the folding angle between the first housing and the second housing, based on the identified folding state; an operation of changing background images of a first display and a second display in an interlocked manner in response to the folding angle; and an operation of displaying the changed background image on the first display or the second display, wherein the first display is disposed to face in a first direction of the first housing and the second housing, and the second display is disposed to face in a second direction opposite to the first direction of one of the first housing or the second housing.

The operation of displaying may include: an operation of, in case that the folding angle is a first angle, displaying a first background image on the first display or displaying a second background image on the second display, and an operation of, in case that the folding angle is a second angle greater than the first angle, displaying a third background image on the first display or displaying a fourth background image on the second display. The first background image and the third background image, and the second background image and the fourth background image may have different object motion changes.

The operation of displaying may include: an operation of varying the degree of change of an object motion included in a background image displayed on the first display according to the rate of change in the folding angle.

The operation of displaying may include: an operation of acquiring acceleration data from a sensor module of the foldable electronic device, an operation of determining a display direction of the background image, based on the acceleration data, and an operation of displaying a changed background image on the first display or the second display, based on the folding angle and the display direction.

The operation of displaying may include: an operation of, in case that the folding angle is a first angle and the display direction is a vertical direction, displaying a first background image on the first display in the vertical direction.

The operation of displaying may include: an operation of controlling an object included in the first background image to move in the vertical direction.

The method may further include: an operation of changing the object motion of the background image in response to the rate of change in the folding angle; an operation of calculating the direction of gravity, based on acceleration data acquired from the sensor module of the foldable electronic device; an operation of changing the object motion of the background image in response to the direction of gravity; and an operation of displaying the changed object motion on the first display or the second display.

The method may further include an operation of calculating the angle between the foldable electronic device and a user, and an operation of changing and displaying a background image on the first display or the second display, based on the angle with the user.

The method may further include an operation of generating a new background image, based on context data and a user's biometric information, and an operation of displaying the new background image on the first display or the second display, based on a change in the folding angle.

Various embodiments of the disclosure disclosed in this specification and drawings are specific examples presented only to easily describe the technical content of the disclosure and to help the understanding of the disclosure, without limiting the scope of the disclosure. Therefore, the scope of the disclosure is to be interpreted as encompassing not only the embodiments disclosed herein, but also all changed or modified forms derived based on the technical idea of the disclosure.

## Claims

1. A foldable electronic device (101) comprising:
a first housing (210) and a second housing (220) disposed on both sides with reference to a folding axis and configured to be folded with respect to each other;
a first display (230) disposed to face a first direction of the first housing and the second housing;
a second display (240) disposed to face a second direction opposite to the first direction of one of the first housing or the second housing;
a sensor module (176);
a memory (130); and
a processor (120) operatively connected to the first display, the second display, the sensor module, or the memory,
wherein the processor is configured to:
identify a folding state of the foldable electronic device;
detect a change in the folding angle between the first housing and the second housing, based on the identified folding state;
change background images of the first display and the second display in an interlocked manner in response to the folding angle; and
display the changed background image on at least one of the first display or the second display.

2. The foldable electronic device of claim 1, wherein the processor is configured to display different background images on at least one of the first display or the second display according to the folding angle, or to display background images on the first display and the second display in an interlocked manner.

3. The foldable electronic device of claim 2, wherein the processor is configured to:
in case that the folding angle is a first angle, display a first background image on the first display or display a second background image on the second display; and
in case that the folding angle is a second angle greater than the first angle, display a third background image on the first display or display a fourth background image on the second display, and
wherein the first background image and the third background image, and the second background image and the fourth background image have different object motion changes.

4. The foldable electronic device of claim 1, wherein the processor is configured to vary the degree of change of an object motion included in a background image displayed on the first display according to the rate of change in the folding angle.

5. The foldable electronic device of claim 1, wherein the processor is configured to:
acquire acceleration data from the sensor module;
determine a display direction of the background image, based on the acceleration data; and
display a changed background image on the first display or the second display, based on the folding angle and the display direction.

6. The foldable electronic device of claim 5, wherein the processor is configured to, in case that the folding angle is a first angle and the display direction is a vertical direction, display a first background image on the first display in the vertical direction.

7. The foldable electronic device of claim 6, wherein the processor is configured to control an object included in the first background image to move in the vertical direction.

8. The foldable electronic device of claim 1, wherein the processor is configured to:
change the object motion of the background image in response to the rate of change in the folding angle;
calculate the direction of gravity, based on acceleration data acquired from the sensor module;
change the object motion of the background image in response to the direction of gravity; and
display the changed object motion on the first display or the second display.

9. The foldable electronic device of claim 1, wherein the processor is configured to:
calculate the angle between the foldable electronic device and a user; and
change and display a background image on the first display or the second display, based on the angle with the user.

10. The foldable electronic device of claim 1, wherein the processor is configured to:
generate a new background image, based on context data and a user's biometric information; and
display the new background image on the first display or the second display, based on a change in the folding angle.

11. The foldable electronic device of claim 10, wherein the processor is configured to:
receive a background image of a counterpart from a counterpart electronic device; and
generate a new background image, based on at least one of the counterpart's background image, the context data, and the user's biometric information.

12. A method for operating a foldable electronic device (101) comprising a first housing (210) and a second housing (220) disposed on both sides with reference to a folding axis and configured to be folded with respect to each other, the method comprising:
identifying a folding state of the foldable electronic device;
detecting a change in the folding angle between the first housing and the second housing, based on the identified folding state;
changing background images of a first display and a second display in an interlocked manner in response to the folding angle; and
displaying the changed background image on the first display or the second display,
wherein the first display is disposed to face a first direction of the first housing and the second housing, and the second display is disposed to face a second direction opposite to the first direction of one of the first housing or the second housing.

13. The method of claim 12, wherein the displaying comprises:
in case that the folding angle is a first angle, displaying a first background image on the first display or displaying a second background image on the second display; and
in case that the folding angle is a second angle greater than the first angle, displaying a third background image on the first display or displaying a fourth background image on the second display, and
wherein the first background image and the third background image, and the second background image and the fourth background image have different object motion changes.

14. The method of claim 12, wherein the displaying comprises varying the degree of change of an object motion included in a background image displayed on the first display according to the rate of change in the folding angle.

15. The method of claim 12, wherein the displaying comprises:
acquiring acceleration data from a sensor module of the foldable electronic device;
determining a display direction of the background image, based on the acceleration data; and
displaying a changed background image on the first display or the second display, based on the folding angle and the display direction.
